(19) Europäisches Patentamt
European Patent Office
Office européen des brevets

(11) Publication number: **0 230 099 A2**

# (12) EUROPEAN PATENT APPLICATION

(21) Application number: **86308380.4**

(22) Date of filing: **28.10.86**

(51) Int. Cl.[4]: **C 08 G 65/00**, C 08 G 65/40, C 08 G 59/62, C 08 L 71/00

(30) Priority: **28.10.85 JP 239558/85**
**06.11.85 JP 246985/85**
**20.08.86 JP 195114/86**
**30.08.86 JP 202754/86**
**03.09.86 JP 205779/86**

(43) Date of publication of application: **29.07.87 Bulletin 87/31**

(84) Designated Contracting States: **DE FR GB IT**

(71) Applicant: **MITSUI PETROCHEMICAL INDUSTRIES, LTD., 2-5, Kasumigaseki 3-chome Chiyoda-ku, Tokyo 100 (JP)**

(72) Inventor: **Yatsu, Tadao, 69-14, Muronoki-cho 4-chome, Iwakuni-shi Yamaguchi-ken (JP)**
Inventor: **Ishimaru, Etsuji, 45-8, Yamate-cho 2-chome, Iwakuni-shi Yamaguchi-ken (JP)**
Inventor: **Miura, Kimiyoshi, 2-6, Misono 1-chome, Ohtake-shi Hiroshima-ken (JP)**
Inventor: **Wakumoto, Hiroshi, 7-20, Iwakuni 2-chome, Iwakuni-shi Yamaguchi-ken (JP)**

(74) Representative: **Myerscough, Philip Boyd et al, J.A.Kemp & Co. 14, South Square Gray's Inn, London, WC1R 5EU (GB)**

## (54) Polyhydroxypolyethers, process for production thereof, and use thereof.

(57) A substantially linear polyhydroxypolyether consisting essentially of recurring units represented by the general formula

$$-\!\!\left(OCH_2\underset{\displaystyle OH}{\underset{|}{C}}HCH_2O-R^1\right)_n\!\!- \qquad (I)$$

wherein $R^1$ represents a p-phenylene group or a divalent aromatic hydrocarbon group containing the p-phenylene group as a main component, and n is a positive number, said polyhydroxypolyether having an intrinsic viscosity [η], measured in o-chlorophenol at 25 °C, of 0.3 to 2 dl/g, and containing not more than 0.2% by weight of nonionic organic halogen. The polyhydroxypolyether may be prepared by reacting a diglycidyl ether of an aromatic diol with an aromatic diol in the presence of a catalyst selected from the group consisting of tertiary amines, quaternary ammonium compounds, tertiary phosphines and quaternary phosphonium compounds, The polyhydroxypolyether is useful as a gas-barrier imparting agent.

EP 0 230 099 A2

# POLYHYDROXYPOLYETHERS, PROCESS FOR PRODUCTION THEREOF, AND USE THEREOF

This invention relates to novel polyhydroxypolyethers having excellent melt-moldability, stretchability, electrical insulation, mechanical strength and gas-barrier property and being suitable as an electrical insulation material, to a process for its production and to its use.

Paper, cloths, or plastics such as polyesters, polystyrene, polyethylene, polyvinyl chloride, polyvinyl acetate, polycarbonate and polypropylene have been used as a material for electrical insulation of motors, transformers, capacitors, printed circuit boards or electric wires and cables. These electrical insulating materials are used in respective applications utilizing their respective characteristics. Among these electrical insulating materials, polyesters, particularly polyethylene terephthalate, are used most frequently in capacitors, motors, transformers, electrical wires and cables, and flexible printed circuit boards because of their high mechanical strength, a broad service temperature range, excellent gas-barrier property and relatively good electrical properties. Although polyethylene terephthalate exhibits a sufficient performance in these applications in the early period of use, its performance decreases with time during long-term use. This is partly because polyethylene terephthalate undergoes degradation with time and although its gas barrier property is relatively good among plastic materials, it is still not entirely sufficient for long-term use. During long-term use, gases such as oxygen pass through the polyethylene terephthalate insulation layer and corrode a metallic material constituting the electrodes or circuit. There has been an increased desire for an improvement in the performance of the electrical insulating polyester materials, and to achieve this desire, there has been a strong demand for electrical insulating polyester materials having

outstanding gas-barrier property and other properties such as electrical properties equivalent to, or higher than, those of polyethylene terephthalate.

Japanese Laid-Open Patent Publication No. 64624/1984 discloses a packaging material having good gas barrier properties with respect to oxygen and carbon dioxide gas which is formed from a polyalkylene isophthalate and its copolymer, such as polyethylene isophthalate, and also molded articles prepared therefrom.

Japanese Laid-Open Patent Publication No. 67049/1984 filed by the same applicant as the applicant of the above-cited patent publication discloses a multilayer packaging material composed of a layer of a polyalkylene isophthalate or its copolymer and a layer of a polyalkylene terephthalate or its copolymer such as polyethylene terephthalate, and molded articles prepared therefrom such as a bottle. It, however, fails to describe anything on the electrical insulating characteristics of these materials.

Japanese Laid-Open Patent Publication No. 39547/1984 discloses a multilayer container having excellent gas permeability resistance which is composed of an innermost layer of a polyester having ethylene terephthalate units as main recurring units and outer layers of a polyester containing ethylene isophthalate units as main recurring units in which the thin-walled portion is oriented in at least one direction. However, it describes nothing on the electrical insulating properties of these materials.

As a material different from polyesters, Japanese Laid-Open Patent Publication No. 36296/1973 discloses a polyamide having good transparency derived from m-xylylene diamine or a mixture of it with p-xylylenediamine as a diamine component and a specific aliphatic dicarboxylic acid as a dicarboxylic acid component. The patent document states that the polyamide

shows good impact strength and has excellent processability, but fails to describe its gas-barrier property.

Japanese Laid-Open Patent Publication No. 64866/1981 discloses a multilayer container composed of an outermost and an innermost layer of a polyester having ethylene terephthalate units as main recurring units and an interlayer of a polyamide derived from m-xylylenediamine or a mixture of it with p-xylylenediamine as a diamine component, in which the thin-walled portion is oriented in at least one direction. The patent document states that the container has excellent oxygen barrier property without a degradation in the exclient dynamical properties, transparency and chemical resistance of the polyester. However, it fails to describe the electrical insulating properties of these materials.

Journal of Applied Polymer Science, vol. 7, 2135-2144 (1963) discloses the gas-barrier property of a homopolyhydroxypolyether represented by the following formula (A)

$$\left( O-E-O-CH_2-\underset{OH}{CH}-CH_2 \right)_x \quad .....[A]$$

wherein E is

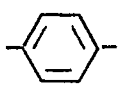 ,

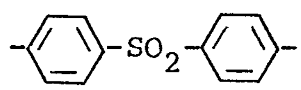 ,

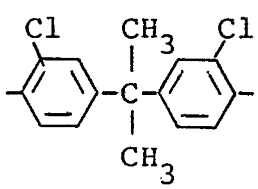 ,

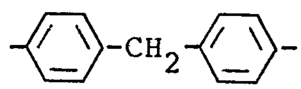 ,

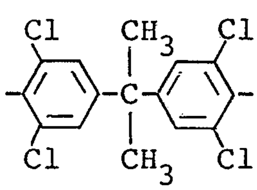 ,

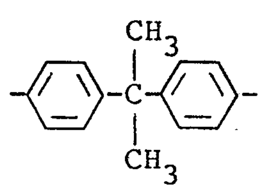 ,

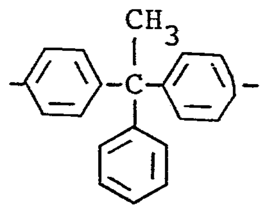 , 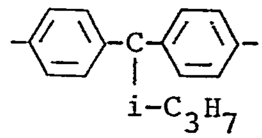 ,

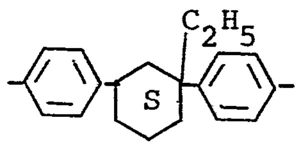 , or 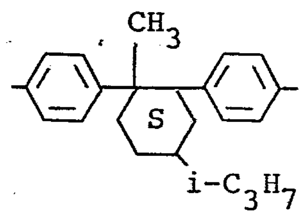 .

A homopolyhydroxypolyether having the lowest oxygen permeability is one of the above formula (A) in which E is 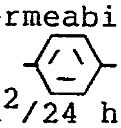, and its oxygen permeability is 0.5 cc-mil/100 $in^2$/24 hr/atm. A homopolyhydroxyether having the lowest degree of water vapor transfer is one of the above formula (A) in which E is

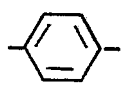 , 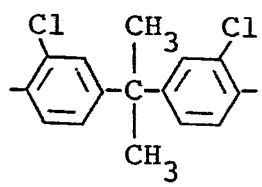 ,

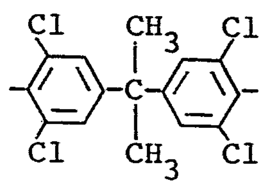 , or 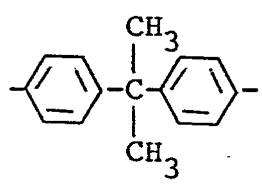 ,

and its water vapor transfer value is 3 g-mil/100 $in^2$/24 hr at 100$^{o}$F and 90% RH. However, the paper does not describe the halogen content of these homopolyhydroxypolyethers which greatly affects their electrical properties. It is described that these homopolyhydroxypolyethers were produced by the method disclosed long ago in U. S. Patent No. 2,602,075 (November 26, 1948).

U. S. Patent No. 2,602,075 describes that a polyhydroxypolyether can be produced by reacting an aromatic diol with epichlorohydrin, and particularly

describes a method of producing a polymer from hydroquinone and epichlorohydrin in detail. However, when the above polymers are produced by the methods described in Examples in this patent, most of them are low polymers outside the scope of the claims of the present application. Such polymers are difficult to shape into films or sheets. Even when their molecular weight increases, these polymers contain at least 0.2% by weight of non-ionic organic chlorine.

Journal of Applied Polymer Science, vol. 7, 2145-2152 (1963) discloses the gas-barrier property of a copolyhydroxypolyether represented by the following formula (B)

$$-R_1-OCH_2\overset{OH}{C}HCH_2O-R_2-OCH_2\overset{OH}{C}HCH_2O- \quad .....(B)$$

wherein $R_1$ is

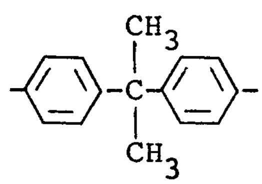 ($B^1$),

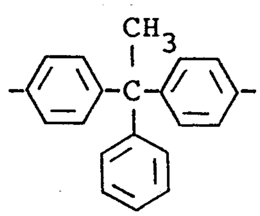 ($B^2$), 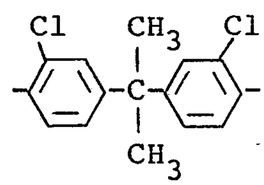 ($B^3$),

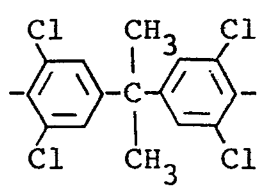 ($B^4$), 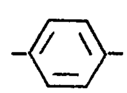 ($B^5$),

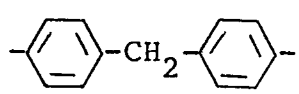 ($B^6$), or 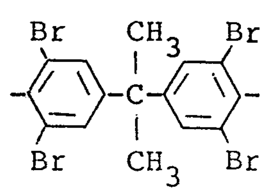 ($B^7$),

and $R_2$ is

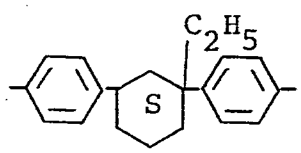 ($B^8$), 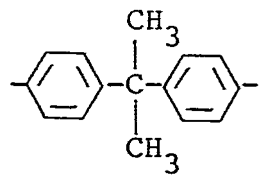 ($B^9$)

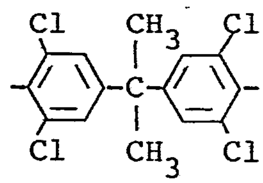 ($B^{10}$) ,

provided that $R_1$ is not identical with $R_2$. A copolyhydroxypolyether of formula (B) in which $R_1$ is $B^3$ and $R_2$ is $B^1$, and a copolyhydroxypolyether of formula (B) in which $R_1$ is $B^6$ and $R_2$ is $B^4$ have the lowest oxygen permeability which is 5 g-ml/100 $in^2$/24 hr/atm. A copolyhydroxypolyether of formula (B) in which $R_1$ is $B^1$ and $R_2$ is $B^8$, a copolyhydroxypolyether of formula (B) in which $R_1$ is $B^6$ and $R_2$ is $B^4$, and a copolyhydroxypolyether of formula (B) in which $R_1$ is $B^7$ and $R_2$ is $B^1$ have the lowest degree of water vapor transfer which is 4 g-ml/100 $in^2$/24 hr at 100°F and 90% RH. However, the above paper does not give any description on the halogen content of the copolyhydroxypolyethers. It also describes that these copolymers are produced in accordance with the above-cited U. S. Patent No. 2,602,075, but gives no detailed disclosure.

Japanese Laid-Open Patent Publication No. 100828/1981 discloses that a linear hydroquinonephenoxy polymer produced from hydroquinone and epichlorohydrin by interfacial polymerization is characterized by strong non-permeability to oxygen and carbon dioxide. However, this patent document fails to describe the halogen content of the hydroquinonephenoxy polymer and its electrical properties. When the inventors of the present invention produced the hydroquinonephenoxy polymer in accordance

with the method described in the above patent document, it contained at least 0.2% by weight of non-ionic organic chlorine atoms, and had inferior electrical insulation to the polyhydroxypolyether of the present invention.

It has also been found that this hydroquinonephenoxy polymer loses transparency at high humidity. Specifically, when a press sheet of the hydroquinonephenoxy polymer was left to stand in a high humidity atomosphere in the vapor phase or in water, its transparency was seen to be reduced.

Japanese Patent Publication No. 4494/1953 discloses a method of producing a resin which comprises reacting a dihydric phenol with an epihalohydrin to produce a diglycidyl ether of the dihydric phenol or its oligomer, and then further reacting the product with a dihydric phenol. This patent document, however, does not disclose a homopolyhydroxypolyether of hydroquinone. The polymer obtained in a working example in this patent document is insoluble or has an epoxide equivalent of up to 5,600 at the highest. It is at least difficult by this method to produce a substantially linear hydroquinonephenoxy polymer.

It is an object of this invention to provide a polyhydroxypolyether having excellent electrical insulating property, excellent gas-barrier property, particularly oxygen-barrier property and high mechanical strength.

Another object of this invention is to provide a polyhydroxypolyether having excellent melt moldability and stretchability.

Another object of this invention is to provide a gas barrier property imparting agent composed of the aforesaid polyhydroxypolyether.

Another object of this invention is to provide a process for producing the aforesaid polyhydroxypolyether of the invention.

Another object of this invention is to provide

a polyester composition comprising the novel polyhydroxypolyether of the invention.

Another object of this invention is to provide a polyester composition comprising the polyhydroxypolyether of this invention having excellent gas-barrier property, especially with respect to oxygen and carbon dioxide gas, and a polyalkylene terephthalate composed of ethylene terephthalate units as main structural units.

Another object of this invention is to provide a polyester composition having excellent gas-barrier property, melt-moldability and stretchability.

Another object of this invention is to provide a stretched molded article of the polyester composition of the invention, a preform for preparation of a stretched hollow molded article, and a stretched hollow molded article.

Another object of this invention is to provide a polyester laminated article comprising the novel polyhydroxypolyether of this invention as a constituent component.

Another object of this invention is to provide a polyester laminated article having excellent gas-barrier property, melt-moldability and stretchability.

Another object of this invention is to provide a stretched product of the aforesaid laminated article, a preform for preparation of a multilayer hollow molded article, and a multilayer hollow molded article.

Further objects of this invention along with its advantages will become apparent from the following description.

According to this invention, the above objects and advantages of this invention are firstly achieved by a substantially linear polyhydroxypolyether consisting essentially of recurring units represented by the general formula

$$-(OCH_2\underset{OH}{CH}CH_2O-R^1)_n- \quad ..... (I)$$

wherein $R^1$ represents a p-phenylene group or a divalent aromatic hydrocarbon group containing the p-phenylene group as a main component, and n is a positive number,

said polyhydroxypolyether having an intrinsic viscosity [η], measured in o-chlorophenol at 25°C, of 0.3 to 2 dl/g, and containing not more than 0.2% by weight of nonionic organic halogen.

According to this invention, the polyhydroxypolyether of the invention can be produced by a process which comprises reacting a glycidyl ether of an aromatic diol represented by the general formula

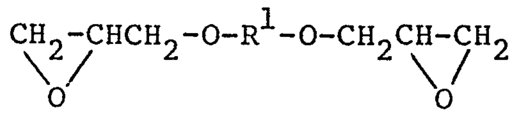

.....(II)

wherein $R^1$ represents a p-phenylene group or a divalent aromatic hydrocarbon group containing the p-phenylene group as a main component,

with an aromatic diol represented by the general formula

$$HO-R^1-OH \quad .....(III)$$

wherein $R^1$ is as defined above,

in the presence of a catalyst selected from the group consisting of tertiary amines, quaternary ammonium compounds, tertiary phosphines and quaternary phosphonium compounds.

The diglycidyl ether of an aromatic diol used as one starting material in the above process is represented by the above formula (II). In formula (II), $R^1$ represents a divalent aromatic hydrocarbon group comprising a p-phenylene group as a main component.

Specifically, $R^1$ may be a p-phenylene group or a mixture of a major proportion of the p-phenylene group and a minor proportion of a divalent aromatic hydrocarbon group other than the p-phenylene group. The other aromatic hydrocarbon group may be present in an amount of not more than 50 mole%, preferably not more than 40 mole%, based on the p-phenylene group. Examples of the divalent aromatic hydrocarbon groups other than the p-phenylene group are as follows:-

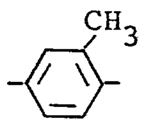 , 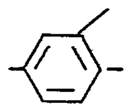 , 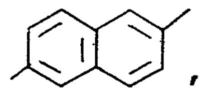 ,

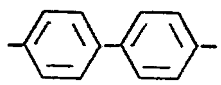 , 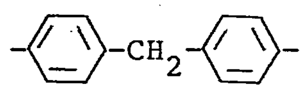 ,

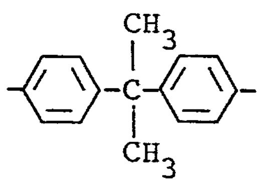 , 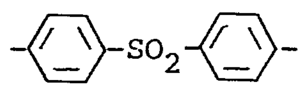 ,

and 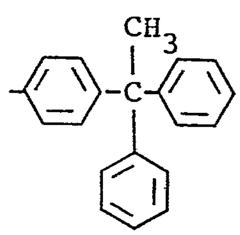 .

When $R^1$ is a p-phenylene group in formula (II), the diglycidyl ether of an aromtic diol is a diglycidyl ether of hydroquinone represented by the following formula.

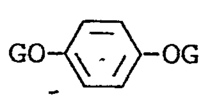

wherein G represents a glycidyl group, namely $-CH_2-\underbrace{CH-CH_2}_{O}$ (the same applies hereinafter).

Examples of the diglycidyl ether of an aromatic diol which may be used together with the diglycidyl ether of hydroquinone are listed below.

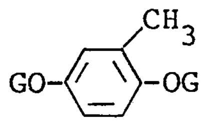 ,

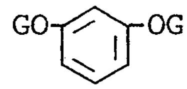 ,

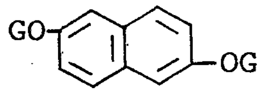 ,

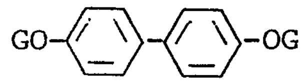 ,

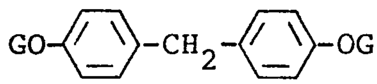 ,

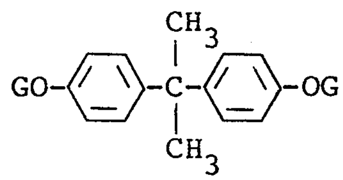 ,

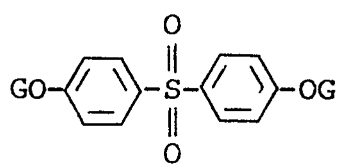 , and

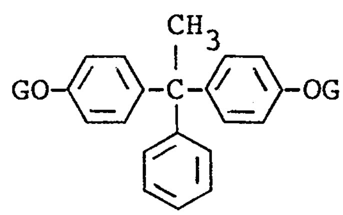 .

The compound of formula (II) can be produced by reacting an aromatic diol represented by the following formula

$$OH-R^1-OH \qquad .....(III)$$

wherein $R^1$ is as defined above,

with an epihalohydrin represented by the formula

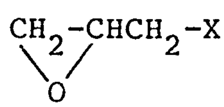 .....(IV)

wherein X represents a halogen atom such as fluorine, chlorine or bromine,

in the presence of a basic compound.

The diglycidyl ether of an aromatic diol represented by formula (II) which is obtained from the

aromatic diol and the epihalohydrin may contain small amounts of a monoglycidyl ether of the aromatic diol and the epihalohydrin or a diglycidyl ether of a lower polymer.

The aromatic diol used as one starting material and the aromatic diol used to produce the diglycidyl ether of an aromatic diol represented by formula (II) are represented by formula (III). In formula (III), $R^1$ represents a divalent aromatic hydrocarbon group containing a p-phenylene group as a main component, and its examples are the same as given with regard to formula (II).

Examples of formula (III) therefore include hydroquinone and mixtures of hydroquinone with other aromatic dihydroxyl compounds such as resorcinol, methylhydroquinone, bisphenol A, bisphenol F, bisphenol ACP, bisphenol L, bisphenol V and bisphenol S.

The above process is carried out by reacting the diglycidyl ether (II) of an aromatic diol and the aromatic diol (III) in the presence of, as a catalyst, at least one of tertiary amines, quaternary ammonium compounds, tertiary phosphines and quaternary phosphonium compounds.

The proportions of the diglycidyl ether (II) and the aromatic diol (III) are such that 0.95 to 1.05 moles, preferably 0.97 to 1.03 moles, more preferably 0.98 to 1.02 mole, of the aromatic diol (III) is used per mole of the diglycidyl ether (II).

Examples of the tertiary amines used as catalyst are triethylamine, tri-n-propylamine, tri-isopropylamine, tri-n-butylamine, tri-sec.-butylamine, tri-n-hexylamine, dimethylbenzylamine, diethylbenzylamine and tribenzylamine. Examples of the quaternary ammonium compounds are quaternary ammonium hydroxide compounds such as tetraethyl ammonium hydroxide, tetra-n-propyl ammonium hydroxide, tetraisopropyl ammonium hydroxide, tetra-n-butyl

ammonium hydroxide, trimethyl benzyl ammonium hydroxide, and triethyl benzyl ammonium hydroxide. Examples of the tertiary phosphines are triethylphosphine, tri-n-butylphosphine, triphenylphosphine, and trinonylphenylphosphine. The quaternary phosphonium compounds may, for example, be quaternary phosphoniumhydroxide compounds such as tetramethyl phosphonium hydroxide.

The suitable amount of the catalyst used is 0.001 to 10 mole%, preferably 0.005 to 5 mole%, more preferably 0.01 to 1 mole%, based on the diglycidyl ether (III) of the aromatic diol.

In the above process of production, the reaction may be carried out in the presence of a small amount of a compound containing one phenolic hydroxyl group in the molecule in order to stabilize the ends of the polyhydroxypolyether as a product. Examples of the compound containing one phenolic hydroxyl group in the molecule are phenol, o-cresol, m-cresol, p-cresol, p-t-butylphenol, p-phenylphenol, and p-cumylphenol. The amount of the compound containing one phenolic hydroxyl group in the molecule which may be used is not more than 0.05 mole, preferably not more than 0.03 mole, more preferably not more than 0.02 mole, per mole of the diglycidyl ether of the aromatic diol.

An inert solvent may be used in the process of this invention in order to reduce the viscosity of the system during the reaction and to allow the reaction to proceed favorably. Examples of the inert solvent include saturated aliphatic hydrocarbons such as n-decane and decahydronaphthalene; aromatic hydrocarbons such as benzene, toluene, xylene, trimethylbenzene, tetramethylbenzene, ethylbenzene, cumene, n-butylbenzene, tetrahydronaphthalene and naphthalene; ketones such as methyl ethyl ketone, methyl isobutyl ketone, 2-hexanone, cyclohexanone and acetophenone; amides such as N,N-dimethylacetamide and N-methyl-2-pyrrolidone; and sulfoxides such as

dimethyl sulfoxide. The solvent may be used in an amount of, for example, not more than 2 parts by weight, preferably not more than 1 part by weight, more preferably not more than 0.5 part by weight, per part by weight of the resulting polymer. The solvent may be separated and removed from the polyhydroxypolyether as a final product by a conventional method, for example by reducing the pressure of the reaction system before the end of the reaction, or by reprecipitating the reaction product after the reaction.

The reaction is carried out with stirring at a temperature of about 70 to 260°C, preferably 80 to 240°C, usually under atmospheric pressure or elevated pressure. Where the solvent used for viscosity adjustment is to be removed, it may also be carried out under reduced pressure. The reaction usually ends in 0.5 to 10 hours. After the reaction, the polyhydroxypolyether as a final product is separated from the reaction system by methods known *per se*.

Thus, according to the process of this invention, a substantially linear polyhydroxypolyether represented by the following formula

$$-\!\!\left(OCH_2\underset{\displaystyle OH}{CH}CH_2-O-R^1\right)\!\!_n \qquad .....(I)$$

wherein $R^1$ is as defined above, and n is a positive number,

is obtained.

In formula (I), the value of *n* is a positive number by which the intrinsic viscosity [$\eta$] of the polyhydroxypolyether is 0.3 to 2 dl/g. The intrinsic viscosity and melt viscosity are measured by methods to be defined hereinafter. The substantially linear structure means that it consists substantially of a linear structure or a chain-like structure having branched chains. This

expression excludes a substantially gelled crosslinked structure (network structure). This can be ascertained by the fact that the polyhydroxypolyether of this invention is substantially completely dissolved in the solvent used to measure its intrinsic viscosity.

As stated above, the polyhydroxypolyether has an intrinsic viscosity of 0.3 to 2 dl/g. If the intrinsic viscosity is lower than 0.3 dl/g, the polyhydroxypolyether and its stretched product have reduced mechanical strength. Preferably, the polyhydroxypolyether has an intrinsic viscosity of 0.4 to 1.8 dl/g.

The polyhydroxypolyether of the invention contains not more than 0.2% by weight, preferably not more than 0.15% by weight, of nonionic organic halogen. The process of his invention can permit minimization of the content of nonionic organic halogen, and the nonionic organic halogen content within the above range can usually be easily achieved by using the diglycidyl ether of the aromatic diol having a good purity. If the nonionic organic halogen content exceeds 0.2% by weight, the electrical properties, particularly electrical insulation of the polyhydroxypolyether are degraded.

The nonionic organic halogen, as used herein, means an organic halogen element present as a compound by covalent bonds in the polyhydroxypolyether. Its amount can be determined by subtracting the content of inorganic halogen (free ionic halogen) determined by a silver nitrate titration method from the total halogen content determined, for example, by the burning flask method (Schoeniger method).

Advantageously, the polyhydroxypolyether of this invention, as a press sheet or extruded sheet, has a surface resistance of at least $10^{15}$ ohms, preferably at least $10^{16}$ ohms; a dielectric constant measured at $10^6$ Hz of, for example, not more than 8, preferably not more than 6, more preferably not more than 5; and

a dielectric loss tangent measured at $10^6$ Hz of, for example, not more than 0.05, preferably not more than 0.04, more preferably not more than 0.03.

Depending upon the proportion of the starting compounds used to produce the polyhydroxypolyether, the terminals of the polyhydroxypolyether may be hydroquinone units 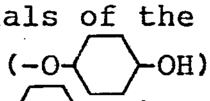, other aromatic diol units (for example, 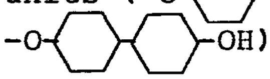), glycerol units 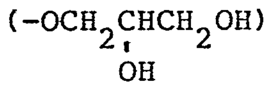, and epoxy groups 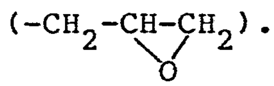. The terminal hydroxyl group (-OH) or epoxy group 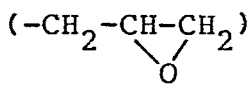 may be converted by an esterification or etherification method known per se into a carboxylic acid ester group such as an acetate group ($-OCOCH_3$) or an ether group such as an ethoxy group ($-OC_2H_5$). The polyhydroxypolyethers of this invention may include those having the various terminals as mentioned above.

The polyhydroxypolyether of this invention has a glass transition temperature of, for example, 30 to 150°C, preferably 40 to 120°C.

The polyhydroxypolyether of this invention has a molecular distribution, defined by the ratio of its weight average molecular weight ($\bar{M}w$) to its number average molecular weight ($\bar{M}n$), $\bar{M}w/\bar{M}n$, of from 1.5 to 10.

The polyhydroxypolyether of this invention has a melt viscosity of $10^3$ poises to $10^5$ poises, preferably $1.2 \times 10^3$ poises to $5 \times 10^4$ poises, when it is extruded from a nozzle having a length of 30 mm and a diameter of 1.0 mm at a temperature of 240°C and a melt viscosity of $10^3$ poises.

The polyhydroxypolyether of this invention may be used in the unstretched state by molding it into a film, a sheet, fibers, a container, or articles of various other shapes by ordinary molding methods. Stretched

films, sheets, fibers and containers of the polyhydroxy polyether also have excellent gas-barrier property.

A stretched molded article of the polyhydroxypolyether of this invention will be described below at some length.

The stretched article of the polyhydroxypolyether of this invention may be in the monoaxially or biaxially stretched state. In the case of the monoaxially stretched article, the stretch ratio is usually 1.1 to 10 times, preferably 1.2 to 8 times, especially preferably 1.5 to 7 times. In the case of the biaxially stretched article, the stretch ratio is usually 1.1 to 8 times, preferably 1.2 to 7 times, especially preferably 1.5 to 6 times, in the longitudinal direction, and usually 1.1 to 8 times, preferably 1.2 to 7 times, especially preferably 1.5 to 6 times, in the transverse direction.

The stretched article of the polyhydroxypolyether of this invention may, as required, contain suitable amounts of various additives such as an inorganic filler, a lubricant, a slip agent, an antiblocking agent, a stabilizer, an antistatic agent and a pigment.

The stretched article of the polyhydroxypolyether of this invention may be produced by any conventional methods. Generally, for example, an unstretched molded article such as a film or sheet is formed from the polyhydroxypolyether or a composition comprising it and the additives, and as such or after cooling it to a temperature below the glass transition temperature and re-heating it, is stretched at a temperature equal to, or higher than, the glass transition temperature of the polymer, preferably from the glass transition temperature to a point 80°C higher than it.

When the unstretched molded article is a film or sheet, the stretched article may be produced, for example, by stretching the unstretched film or sheet monoaxially (monoaxial stretching); stretching it in the

longitudinal direction and then in the transverse direction (biaxial stretching); stretching it simultaneously in the longitudinal and transverse directions (biaxial stretching); biaxially stretching it and subsequently stretching the stretched article in either direction; biaxially stretching it and then stretching the stretched article in both directions; or by a vacuum-forming method in which the film or sheet is stretched by reducing the pressure of the space between the film or sheet and a mold.

If required, the stretched article may be heat-set, in which case it is heat-treated at a temperature equal to, or higher than, the stretching temperature for a suitably short period of time.

The polyhydroxypolyether of this invention may be used singly as a molded article as stated above. In addition, it may be used as a composition containing another polymer or as a laminate with another polymer.

Such a composition which can be provided by this invention may, for example, be a polyester composition comprising the substantially linear polyhydroxypolyether of the invention and a polyalkylene terephthalate composed of ethylene terephthalate as main structural units.

The polyalkylene terephthalate constituting the composition is a polyester composed of ethylene terephthalate as main structural units. The proportion of the ethylene terephthalate structural units is usually at least 50 mole%, preferably at least 70 mole%. The dicarboxylic acid component units constituting the polyalkylene terephthalate may contain a small amount of units of an aromatic dicarboxylic acid other than terephthalic acid. Examples of the other aromatic dicarboxylic acid are isophthalic acid, phthalic acid, and naphthalendicarboxylic acid. The diol component units constituting the polyalkylene terephthalate may contain a

small amounts of units of another diol in addition to the ethylene glycol units. The other diol include diols having 3 to 15 carbon atoms such as 1,3-propanediol, 1,4-butanediol, neopentyl glycol, cyclohexanediol, cyclohexanedimethanol, 1,4-bis(beta-hydroxyethoxy)benzene, 1,3-bis(beta-hydroxyethoxy)benzene, 2,2-bis(4-beta-hydroxyethoxyphenyl)propane, and bis(4-beta-hydroxyethoxyphenyl)sulfone.

The polyalkylene terephthalate may include a small amount of units of a polyfunctional compound as required in addition to the aromatic dicarboxylic acid units and the diol units described above. Examples of the polyfunctional compound include aromatic polybasic acids such as trimellitic acid, trimesic acid and 3,3',5,5'-tetracarboxydiphenyl; aliphatic polybasic acids such as butanetetracarboxylic acid; aromatic polyols such as phloroglucine and 1,2,4,5-tetrahydroxybenzene; aliphatic polyols such as glycerol, trimethylolethane, trimethylolpropane and pentaerythritol; and hydroxypolycarboxylic acids such as tartaric acid and malic acid.

The polyalkylene terephthalate is composed usually of 50 to 100 mole%, preferably 70 to 100 mole%, of the terephthalic acid units, 0 to 50 mole%, preferably 0 to 30 mole%, of the other aromatic dicarboxylic acid units, 50 to 100 mole%, preferably 70 to 100 mole%, of the ethylene glycol units, 0 to 50 mole%, preferably 0 to 30 mole%, of the other diol units, and 0 to 2 mole%, preferably 0 to 1 mole%, of the polyfunctional compound units. The polyalkylene terephthalate has an intrinsic viscosity [$\eta$], determined at 25$^{o}$C in a mixed solvent of phenol and tetrachloroethane in a weight ratio of 1:1, of usually 0.5 to 1.5 dl/g, preferably 0.6 to 1.2 dl/g, a melting point of usually 210 to 265$^{o}$C, preferably 220 to 260$^{o}$C, and a glass transition temperature of usually 50 to 120$^{o}$C, preferably 60 to 100$^{o}$C.

The proportion of the polyhydroxypolyether of

the invention in the polyester composition mentioned above is usually 1 to 500 parts by weight, preferably 2 to 300 parts by weight, especially preferably 3 to 100 parts by weight, per 100 parts by weight of the polyalkylene terephthalate.

The polyester composition of this invention may, as required, comprise known additives such as a nucleating agent, an inorganic filler, a lubricant, a slip agent, an antiblocking agent, a stabilizer, an antistatic agent, an antihaze agent or a pigment in addition to the polyalkylene terephthalate and the polyhydroxypolyether.

A stretched molded article of the polyester composition of the invention may generally be produced under the same conditions as in the aforesaid stretching method for the production of the stretched molded articles of the polyhydroxypolyether of the invention.

The polyester composition can give a preform and a stretch blow-molded article therefrom.

The preform for the preparation of a stretch blow-molded article in accordance with this invention is formed of the polyester composition, and can be obtained by a conventional known method, for example by molding a tubular article of the polyester composition.

The stretch blow-molded article of the invention can be produced by stretch blow-molding the preform. The stretch blow-molded article may be a monoaxially stretched article or a biaxially stretched article. Generally, the biaxially stretched article is preferred because of better mechanical strength and gas-barrier property. The stretch ratio for producing the stretch blow-molded article may be the same as the stretch ratio described. Stretch blow-molding may be effected, for example, by stretching the preform heated to a predetermined temperature in the longitudinal direction, and further blow-molding the stretched preform to

stretch it in the transverse direction (the biaxial stretch blow molding).

The laminated molded article of polyester provided by this invention comprises a polyhydroxypolyether layer composed of the polyhydroxypolyether or the polyester composition of the invention described above and a layer of a polyalkylene terephthalate composed of ethylene terephthalate as main structural units.

The polyhydroxypolyether layer constituting the laminated polyester article of this invention may be formed of the polyhydroxypolyether of the invention or the polyester composition of the invention composed of the polyhydroxypolyether and the polyalkylene terephthalate.

When the polyhydroxypolyether layer is composed of the polyester composition composed of the polyhydroxypolyether and the alkylene terephthalate, the polyester composition is composed of 100 parts by weight of the polyhydroxypolyether and preferably 1 to 100 parts by weight, more preferably 2 to 70 parts by weight, especially preferably 3 to 50 parts by weight, of the polyalkylene terephthalate.

The polyhydroxypolyether or the polyester composition constituting the polyhydroxypolyether layer, and the polyalkylene terephthalate constituting the polyalkylene terephthalate layer may, as required, contain suitable amounts of various known additives such as a nucleating agent, an inorganic filler, a lubricant, a slip agent, an antiblocking agent, a stabilizer, an antistatic agent, an antihaze agent or a pigment.

The polyalkylene terephthalate constituting the polyester composition and the polyalkylene terephthalate constituting the polyalkylene terephthalate layer of the polyester laminated molded article may be the same as those described above. The polyalkylene terephthalates used in the two layers do not have to be the same.

Specific examples of such a laminate include a two-layer laminate composed of a layer of the polyhydroxypolyether and a layer of the polyalkylene terephthalate; a three-layer laminate composed of both outer layers of the polyalkylene terephthalate and an interlayer of the polyhydroxypolyether; a three-layer laminate composed of both outer layers of the polyhydroxypolyether and an interlayer of the polyalkylene terephthalate; a multilayer laminate composed of at least four layers of the polyhydroxypolyether and the polyalkylene terephthalate laminated alternately with the outermost layers being the polyalkylene terephthalate layers; a multilayer laminate composed of at least four layers of the polyhydroxy polyether and the polyalkylene terephthalate laminated alternately with the outermost layers being the polyhydroxypolyether layers; and a multilayer laminate composed of at least four layers of the polyhydroxypolyether and the polyalkylene terephthalte laminated alternately with one outermost layer being the polyalkylene terephthalate layer and the other being the polyhydroxypolyether layer. These laminates may be in the form of sheets, plates, tubes, various hollow structures, containers, and structures of various other shapes. They may be produced by known methods.

The thicknesses of the polyhydroxypolyether layer and the polyalkylene terephthalate layer constituting the laminate are properly determined according to the ultimate uses of the laminates, and are not particularly restricted. In the case of the two-layer laminate, the polyhydroxypolyether layer has a thickness of usually 4 to 350 micrometers, preferably 6 to 200 microns, and the polyalkylene terephthalate layer has a thickness of 8 to 600 micrometers, preferably 10 to 500 micrometers. In the case of the three-layer structure of the first-mentioned type, the polyhydroxypolyether interlayer has a thickness of usually 4 to 350 micrometers, preferably 6

to 200 micrometers, and the polyalkylene terephthalate outer layer has a thickness of usually 4 to 300 micrometers, preferably 5 to 250 micrometers. In the three-layer laminate of the latter type, the polyalkylene terephthalate interlayer has a thickness of usually 8 to 600 micrometers, preferably 10 to 500 micrometers, and the polyhydroxypolyether outer layer has a thickness of usually 4 to 100 micrometers, preferably 6 to 50 microns. In the case of the multilayer laminate composed of at least four layers, the thicknesses of the hydroxypolyether layer and the polyalkylene terephthalate layer either as an interlayer or an outermost layer may be selected in the same way as above.

The laminated aricle can be used in various applications since it has excellent stretchability, electrical properties (particularly electrical insulation), mechanical strength, transparency and gas-barrier property.

When the polyester laminate of this invention is in the stretched state, it is preferable that at least one polyalkylene terephthalate layer be stretched. More preferably, all polyalkylene terephthalate layers are stretched. It is especially preferred that all of the polyhydroxypolyether layers and the polyalkylene terephthalate layers be stretched. The stretched layers may be monoaxially stretched or biaxially stretched, and the stretched polyester laminate may be in any form such as a film or sheet.

The stretch ratios in the monoaxial or biaxial stretching may be the same as those described hereinabove with regard to the polyhydroxypolyether and its compositions.

When the stretched polyester laminate is a film or sheet, it may be produced by any known methods.

Generally, there is used a method which comprises melting the polyhydroxypolyether or the polyester

composition comprising the polyhydroxypolyether and the polyalkylene terephthalate in separate extruders, and molded into a laminated article such as a multilayer laminated film or a mutlilayer laminated sheet from a multilayer T-die by the melt-coextrusion method, and stretching the lamianted article while it is in the heated state or after it is cooled to a temperature below its glass transition temperature and again heated. Alternatively, the polyhydroxypolyether or the polyester composition is extrusion laminated onto a film or sheet molded in advance from the polyalkylene terephthalate, or they are sandwich laminated. At this time, the film or sheet of the polyalkylene terephthalate may be monoaxially or biaxially stretched prior to lamination. The same stretching treatment may be carried out after lamination. The first-mentioned method involving forming the laminated article by co-extrusion and the subsequent stretching treatment is preferably employed because the steps are simple and a stretched polyester laminate having an excellent delamination strength can be obtained.

The same stretching treatment method as described above with regard to the polyhydroxypolyether can be used in the production of the stretched laminated article.

The laminated article of this invention may be in the form of a preform or a stretch blow molded article therefrom.

The preform may include, for example, a preform for production of a two-layer laminated article, a preform for production of a three-layer laminated article, and a preform for production of a multilayer laminated article which are the same as exemplified above with regard to the laminated article. Preferred among these preforms are a two-layer preform composed of a polyhydroxypolyether layer and an alkylene terephthalate layer, and a three-layer preform composed of outer layers of the

polyalkylene terephthalate and an interlayer of the polyhydroxypolyether. Stretched multi-layer blow-molded articles prepared from these preforms have especially good mechanical strength, transparency and gas-barrier property.

As required, suitable amounts of various known additives such as a nucleating agent, an inorganic filler, a lubricant, a slip agnet, an antiblocking agent, a stabilizer, an antistatic agent, an antihaze agent and a pigment may be incorporated into any of the polyhydroxypolyether layer and the polyalkylene terephthalate layer.

The preform for production of multilayer blow-molded articles in accordance with this invention may be produced by known methods, for example by molding a tubular article of the above laminate.

The embodiments of lamination of the polyhydroxypolyether layer and the polyalkylene terephthalate layer in the stretched multilayer blow-molded article of this invention will be apparent from the above description. Preferably, in the stretched multilayer blow-molded article, the inner layer is a polyalkylene terephthalate layer. A stretched three-layer blow-molded article is especially preferred in which the polyhydroxypolyether layer constitutes an interlayer and the polyalkylene terephthalate layer constitutes an inner layer and an outer layer. Generally, the biaxially stretched multilayer blow-molded article is preferred because of its excellent mechanical strength and gas-barrier property.

The stretched multilayer blow-molded article may be produced by stretch blow-molding of the preform in the same way as described hereinabove.

The molded articles and laminates from the polyhydroxypolyether and the polyester composition of this invention can be used in various applications because they have excellent electrical properties (particularly

electrical insulation), mechanical strength, transparency and gas-barrier property. Particularly, when the stretched molded article in accordance with this invention is a film, it can be used for covering electric and electronic products or components or metals, protection of electric and elecronic circuits or prevention of corrosion of metals with a continued effect for a long period of time. The stretched film is also useful for electric and electronic applications for covering capacitors, motors, transformers or wires and cables. The stretched film of this invention is also useful for general applications such as food packaging. The stretched molded article of this invention may be useful in the form of a container for holding foods and carbonated beverages by utilizing its excellent gas-barrier property.

The stretchd blow-molded article of this invention can be used in various applications because of its excellent mechanical strength, thermal resistance and gas-barrier property. The biaxially stretched multilayer blow-molded container in accordance with this invention can hold seasonings, oils, beer, wines and liquors, carbonated beverages such as cola, cider and juices, cosmetics and detergents because of its excellent gas-barrier property. It is especially useful as a container for carbonated drinks, and can hold them with a reduced wall thickness and a prolonged tastable period.

The following examples illustrate the present invention more specifically. In these examples, all parts are by weight, and the various properties were evaluated by the following methods.

The composition of the polyhydroxypolyether was determined by measuring its nuclear magnetic resonance spectrum.

The intrinsic viscosity [$\eta$] of the polyhydroxypolyether was measured in o-chlorophenol at 25$^{o}$C, and expressed in dl/g.

The nonionic organic halogen content (%) of the polyhydroxypolyether was determined as follows: The total chlorine content of the polymer was measured by the burning flask method (the Schoeniger method) in accordance with the procedure described in Saito and Oikawa, "Analytical Chemistry", vol. 31, page E-375 (1982). Then, the inorganic halogen (free ionic halogen) content of the polymer was measured by the silver nitrate titration method. The nonionic organic halogen content was determined by the difference between the total chlorine conent and the inorganic halogen content. More specifically, the procedure of determining the nonionic organic halogen content of the polyhydroxypolyether was as follows:-

About 50 mg of a sample of the polyhydroxypolyether was precisely weighed and completely decomposed in a flask by the burning method. The decomposition gas was introduced into 10 ml of water to prepare an absorption solution. The absorption solution was subjected to ion chromatography using an ion chromatographic device of Model 2000i of of U. S. A. (column: AS-4 type ion chromatographic column made by the same company; eluent: a mixed aqueous solution containing 2.8 millimoles of sodium bicarbonate and 2.25 millimoles of sodium carbonate; detector: electric conductivity detector) to obtain the total chlorine content.

The inorganic halogen (free ionic halogen) content was measured as follows: About 10 g of a sample of the polyhydroxypolyether was precisely weighed, and 100 ml of cyclohexanone was added to dissolve the solution under heat and stirring. The solution was cooled to room temperature, and then 2 ml of distilled water and 1 ml of acetic acid were added to prepare a measuring solution. The measuring solution was titrated with a N/500 isopropanol solution of silver nitrate in an automatic titration device (Model E-536 made by U. S. A.) (burette capacity: 10 ml; electrode: composite silver

electrode). A blank test was carried out without using the polyhydroxypolyether sample. The inorganic halogen content was calculated based on the difference of the results between the two tests.

The glass transition temperature ($^{o}C$) of the polyhydroxypolyether was measured by using a differential scanning calorimeter at a temperature elevation rate of $10^{o}C$/min. on a resin sample obtained by heating the polymer to a melt-flowable state and then quickly cooling it to room temperature.

The electrical properties of the polyhydroxypolyether, or a sheet of this laminated article, or a stretched film thereof were measured as follows:- The surface resistance value was measured at $25^{o}C$ using a vibrating reed electrometer (Model TR-84 made by Takeda Riken Co., Ltd.), and expressed by ohms. The dielectric constant and dielectric loss tangent were measured at $10^{6}$ Hz by using an impedance gain fuse analyzer (Model 4194 made by Yokokawa Hewlett-Packard Co.) after forming an electrode by vacuum evaporating gold on the sheet or stretched film by using a quick coater (Model SC-701 made by Sanko Electronics Co., Ltd.).

The mechanical properties of the polyhydroxy-polyetehr or a sheet of its laminated article or a stretched film thereof were measured in a customary manner by using an Instron tensile tester. The tensile strength and tensile modulus are expressed in kg/$cm^2$, and the elongation, in %.

The gas-barrier property of the polyhydroxypolyether, a sheet of its laminated article stretched film thereof was measured at $25^{o}C$ by an Oxtran device made by Mocon Company for oxygen permeation coefficients, and by a Permatran C-IV device of Mocon Company for carbon dioxide permeation coefficients. Oxygen and carbon dioxide permeation coefficients are expressed in ml.mm/$m^2$.day.atm.

In Tables 1 to 18 given hereinafter, the units of the above properties are omitted, but are to be understood as the same as stated above.

EXAMPLE 1

A reactor equipped with a sitrring device and a refluxing device was charged with 2,202 parts of hydroquinone, and 4,367 parts of hydroquinone diglycidyl ether (epoxy group content 8.98 eq/kg; terminal hydroxyl group content 20 eq/$10^6$g; the nonionic chlorine content 0.03% by weight), and after the inside of the reactor was fully purged with nitrogen, the materials were heated to about 120°C in an atmosphere of nitrogen with stirring. Then, a solution obtained by diluting 13 parts of a 20% aqueous solution of tetraethyl ammonium hydroxide with water to about 15 times was added with stirring, and the reaction as carried out at about 120°C for about 2 hours while removing the heat of reaction. With the lapse of the reaction time, a rise in the viscosity of the reaction system was observed. The reaction mixture was then withdrawn in strand form from the reactor, cooled in water, and cut to pellets. The pellets were dried at about 50°C under reduced pressure and extruded by a vent-equipped twin-screw extruder (screw diameter 20 mm, the screws rotating in the same direction; L/D=42; made by Plastic Engineering Institute Co., Ltd.) at a barrel temperature of about 130°C to about 240°C. The extrudate was cooled by immersion in water, and cut to pellets. The pellets were dried under reduced pressure at 50°C. The resulting hydroquinone polyhydroxypolyether had an intrinsic viscosity [$\eta$] of 0.82 dl/g, a glass transition temperature of 61°C and a nonionic organic chlorine content of 0.023% by weight.

The resulting polyhydroxypolyether was compression molded at about 200°C and 50 kg/$cm^2$ by a compression-molding machine to prepare a sheet having a thickness of about 200 micrometers. The sheet was colorless and had

excellent transparency. The electrical properties of the sheet were measured. It had a surface resistance of $3.0 \times 10^{17}$ ohms, a dielectric constant at $10^6$ Hz of 4.3, and a dielectric loss tangent at $10^6$ Hz of 0.022.

The mechanical properties of the sheet were also measured. It had a tensile strength at break of 430 $kg/cm^2$, a tensile elongation at break of 70% and a tensile modulus of 27,000 $kg/cm^2$, showing high strength properties.

The gas-barrier property of the sheet was further examined. It had a coefficient of carbon dioxide permeation of 1.0 $ml.mm/m^2.day.atm$ and a coefficient of oxygen permeation of 0.29 $ml.mm/m^2.day.atm$.

When the press sheet was left to stand for one day in a stream of air having saturated humidity at room temperature, its transparency was not at all reduced. When the press sheet was immersed overnight in water at room temperature, no phenomenon of loss of transparency was observed.

The press sheet was stretched by a biaxial stretching device to three times simultaneously in the longitudinal and transverse directions at about 70 to 85$^oC$ and a rate of 10 m/sec. A biaxially stretched film having a thickness of about 22 micrometers was obtained.

The electrical properties of the stretched film were measrued. It had a surface resistance of $2.5 \times 10^{17}$ ohms, a dielectric constant at $10^6$ Hz of 4.1 and a dielectric loss tangent at $10^6$ Hz of 0.023.

The mechanical properties of the stretched film were also measured. It had a tensile strength at break of 480 $kg/cm^2$, an elongation at break of 35%, and a tensile modulus of 33,000 $kg/cm^2$.

The gas-barrier property of the biaxially stretched film was measured. It had a coefficient of carbon dioxide permeation of 0.90 $ml.mm/m^2.day.atm$

and a coefficient of oxygen permeation of 0.22 $ml.mm/m^2.day.atm$.

EXAMPLES 2-3

Example 1 was repeated except that the amounts of hydroquinone and hydroquinone diglycidyl ether were changed and each of the catalysts shown in Table 1 was used in the amount indicated instead of tetraethyl ammonium hydroxide; the reaction was carried out by using a reactor of a smaller size than that used in Example 1; the reaction product was extruded at a barrel temperature of about 130 to 240°C under reduced pressure using a single screw extruder (screw diameter 20 mm; L/D=28; made by Thermoplastic Industry Co., Ltd.) instead of the twin screw extruder.

Table 1 summarizes the intrinsic viscosities, glass transition temperatures and nonionic organic chlorine contents of the polyhydroxypolyethers, and the electrical properties, mechanical properties and gas-barrier properties of the press sheets and the biaxially stretched films.

Table 1

| Ex-ample | Amount of hydro-quinone (parts) | Amount of hydro-quinone di-glycidyl ether (parts) | Catalyst | | | Properties of polyhydroxy polyether | | | Properties of press sheet | | |
|---|---|---|---|---|---|---|---|---|---|---|---|
| | | | Kind | Amount (part) | Water dilu-tion ratio | Intrin-sic visco-sity | Glass transi-tion temper-ature | Organic chlorine content | Surface resist-ance | Dielec-tric con-stant | Dielec-tric loss tangent |
| 2 | 220.2 | 436.7 | 40% aqueous solution of of N,N-di-methylbenzyl ammonium hydroxide | 0.7 | 27 | 0.88 | 61 | 0.020 | $1.2x10^{17}$ | 4.2 | 0.025 |
| 3 | 220.2 | 436.7 | N,N-dimethyl-benzylamine | 1.2 | 17 | 0.75 | 59 | 0.020 | $9x10^{16}$ | 4.0 | 0.023 |

| | Properties of press sheet | | | | Properties of biaxially stretched film | | | | | | | |
|---|---|---|---|---|---|---|---|---|---|---|---|---|
| | Tensile strength at break | Elon-gation | Tensile modulus | Carbon dioxide perme-ation coef-ficient | Surface resist-ance | Dielec-tric con-stant | Dielec-tric loss tangent | Tensile strength at break | Elon-gation | Tensile modulus | Carbon dioxide perme-ation coef-ficient | Oxygen perme-ation coef-ficient |
| | 440 | 73 | 28000 | 0.96 | $1.0x10^{17}$ | 4.1 | 0.023 | 510 | 30 | 33000 | 0.90 | 0.20 |
| | 400 | 75 | 26000 | 1.0 | $8x10^{16}$ | 4.1 | 0.024 | 470 | 30 | 30000 | 0.95 | 0.21 |

EXAMPLES 4-5

Hydroquinone polyhydroxypolyethers were produced in the same way as in Example 2 except that the amount of the hydroquinone diglycidyl ether was changed as shown in Table 2, and a 20% aqueous solution of tetraethyl ammonium hydroxide was used as a catalyst in the amount indicated in Table 2. The properties of the resulting hydroquinonepolyhydroxypolyethers are shown in Table 2.

Press sheets and biaxially stretched films were prepared as in Example 2 from the resulting hydroquinonepolyhydroxypolyethers. The properties of the press sheets and the biaxially stretched films are shown in Table 2.

Table 2

| Example | Amount of hydroquinone diglycidyl ether (parts) | 20% aqueous solution of tetraethylammonium hydroxide | | Properties of polyhydroxy polyether | | | Properties of press sheet | | |
|---|---|---|---|---|---|---|---|---|---|
| | | Amount (part) | Water dilution ratio | Intrinsic viscosity | Glass transition temperature | Non-ionic organic chlorine content | Surface resistance | Dielectric constant | Dielectric loss tangent |
| 4 | 432.2 | 1.3 | 15 | 0.56 | 58 | 0.023 | $2.5x10^{17}$ | 4.2 | 0.023 |
| 5 | 427.8 | 1.3 | 15 | 0.37 | 58 | 0.022 | $8x10^{16}$ | 4.3 | 0.022 |

| | Properties of press sheet | | | | Properties of biaxially stretched film | | | | | | | |
|---|---|---|---|---|---|---|---|---|---|---|---|---|
| | Tensile strength at break | Elongation | Tensile modulus | Carbon dioxide permeation coefficient | Surface resistance | Dielectric constant | Dielectric loss tangent | Tensile strength at break | Elongation | Tensile modulus | Carbon dioxide permeation coefficient | Oxygen permeation coefficient |
| | 370 | 70 | 23000 | 0.97 | $1.2x10^{17}$ | 4.3 | 0.022 | 430 | 34 | 29000 | 0.95 | 0.20 |
| | 330 | 70 | 22000 | 0.98 | $7x10^{16}$ | 4.5 | 0.024 | 390 | 35 | 26000 | 0.98 | 0.22 |

EXAMPLES 6-7

Hydroquinonepolyhydroxypolyethers were produced in the same way as in Example 4 except that the amount of hydroquinone diglycidyl ether was changed as shown in Table 3. The properties of the resulting hydroquinonepolyhydroxypolyethers are shown in Table 2.

Press sheets and biaxially stretched films were prepared from the hydroquinonepolyhydroxypolyethers in the same way as in Example 4. The properties of the resulting press sheets and biaxially stretched films are shown in Table 3.

Table 3

| Example | Properties of hydroquinone diglycidyl ether | | | Amount of hydroquinone diglycidyl ether (parts) | Properties of polyhydroxy polyether | | | Properties of press sheet | | |
|---|---|---|---|---|---|---|---|---|---|---|
| | Epoxy group content | Terminal hydroxyl group content | Base content | | Intrinsic viscosity | Glass transition temperature | Non-ionic organic chlorine content | Surface resistance | Dielectric constant | Dielectric loss tangent |
| 6 | 7.30 | 26 | 0.13 | 537.0 | 0.86 | 60 | 0.092 | $9x10^{16}$ | 4.6 | 0.025 |
| 7 | 8.82 | 27 | 0.24 | 444.5 | 0.91 | 60 | 0.16 | $7x10^{16}$ | 4.7 | 0.025 |

| Properties of press sheet | | | | Properties of biaxially stretched film | | | | | | |
|---|---|---|---|---|---|---|---|---|---|---|
| Tensile strength at break | Elongation | Tensile modulus | Carbon dioxide permeation coefficient | Surface resistance | Dielectric constant | Dielectric loss tangent | Tensile strength at break | Elongation | Tensile modulus | Carbon dioxide permeation coefficient |
| 390 | 78 | 27000 | 0.2 | $8x10^{16}$ | 4.5 | 0.025 | 490 | 27 | 32000 | 1.0 |
| 410 | 77 | 28000 | 1.0 | $7x10^{16}$ | 4.6 | 0.026 | 500 | 31 | 33000 | 0.92 |

COMPARATIVE EXAMPLE 1

Hydroquinone (220.2 parts), 185.1 parts of epichlorohydrin, 600 parts of cyclohexanone, 510 parts of distilled water, 48 parts of trimethylbenzyl ammonium chloride and 179.2 parts of a 50% aqueous solution of sodium hydroxide, and maintained at about 80°C for about 3 hours and then at about 95°C for about 3 hours with stirring. With the lapse of the reaction time, the viscosity of the reaction system increased. After the reaction, the reaction mixture was neutralized by adding 160 parts of acetic acid and left to stand. It separated into an oil layer containing the polyhydroxypolyether formed as a result of the reaction as an upper layer and an aqueous lower layer. The water layer was removed, and the viscosity of the oil layer was adjusted by using acetic acid and cyclohexane. Then, the oil layer was poured into a large amount of methanol to precipitate the resulting polyhydroxypolyether. The polyhydroxypolyether was washed with methanol and water and again dissolved in 600 parts of cyclohexanone. The solution was poured into a large amount of methanol to precipitate the polyhydroxypolyether again. The polyhydroxypolyether was washed with methanol and water, and dried under vacuum at 40°C. The resulting polyhydroxypolyether had an intrinsic viscosity [$\eta$] of 0.81 dl/g, a glass transition temperature of 56°C, and a nonionic organic chlorine content of 0.32% by weight.

A press sheet was produced from the resulting polyhydroxypolyether as in Example 1, and its properties were measured. The press sheet had a surface electrical resistance of 7 x $10^{15}$ ohms, a dielectric constant at $10^6$ Hz of 6.4 and a dielectric loss tangent at $10^6$ Hz of 0.033. It had a tensile strength at break of 330 kg/cm$^2$, an elongation of 80 % and a tensile modulus of 24,000 kg/cm$^2$. The press sheet had a coefficient of carbon dioxide permeation of 1.9 ml.mm/m$^2$.day.atm and

a coefficient of oxygen permeation of 0.37 ml.mm/ $m^2$.day.atm.

When this press sheet was left to stand for one day in a stream of air having a saturated humidity at room temperature, it became whitely hazy all over, showing a reduction in transparency. When it was immersed overnight in water at room temperature, it also became whitely hazy all over, and its transparency was completely lost.

The press sheet was biaxially stretched in the same way as in Example 1 to prepare a biaxially stretched film having a thickness of about 22 microns. The biaxially stretched film had a surface resistance of 1.0 x $10^{16}$ ohms, a dielectric constant at $10^6$ Hz of 6.5, a dielectric loss tangent at $10^6$ Hz of 0.034, a tensile strength at breakage of 390 kg/$cm^2$, an elongation of 30%, a tensile modulus of 27,000 kg/$cm^2$, a coefficient of carbon dioxide permeation of 1.6 ml.mm/$m^2$.day.atm, and a coefficient of oxygen permeation of 0.31 ml.mm/$m^2$.day.atm.

COMPARATIVE EXAMPLE 2

Hydroquinone polyhydroxypolyether was produced in the same way as in Example 4 except that the amount of hydroquinone diglycidyl ether was changed to 401.0 parts. The resulting hydroquinone polyhydroxypolyether had an intrinsic viscosity [$\eta$] of 0.25 dl/g, a glass transition temperature of 556°C, and a nonionic organic chlorine content of 0.022% by weight.

Attempt was made to prepare a press sheet from the resulting hydroquinone polyhydroxypolyether as in Example 4. The resulting press sheet was brittle and broken by application of a light external force. Its electrical properties, mechanical properties and gas-carrier property could not be measured.

EXAMPLES 8-10

Polyhydroxypolyethers were prepared in the same way as in Example 4 except that each of the aromatic

diols indicated in Table 4 was used in the amount indicated instead of hydroquinone and each of diglycidyl ethers of aromatic diols indicated in Table 4 was used in the amount indicated instead of hydroquinone diglycidyl ether. The aromaic diol proportions, the intrinsic viscosities, and nonionic organic chlorine contents of the resulting polyhydroxypolyethers are shown in Table 4.

Press sheets and biaxially stretched films were prepared from these polyhydroxypolyethers as in Example 4. The properties of the press sheets and biaxially stretched films are shown in Table 4.

Table 4

| Example | Aromatic diol | | | Diglycidyl ether of aromatic diol | | | Properties of polyhydroxy polyether | | | |
|---|---|---|---|---|---|---|---|---|---|---|
| | Amount of hydroquinone (parts) | Other aromatic diol | | Amount of hydroquinone diglycidyl ether (parts) | Other diglycidyl ether | | Mole ratio of aromatic diols | Intrinsic viscosity | Glass transition temperature | Non-ionic organic chlorine content |
| | | Kind | Amount (part) | | Kind | Amount (part) | | | | |
| 8 | 165.2 | p,p-biphenol | 93.1 | 436.7 | - | - | hydroquinone: p,p'-biphenol =87:13 | 0.75 | 73 | 0.020 |
| 9 | 165.2 | 4,4'-dihydroxydiphenylsulfone | 125.1 | 436.7 | - | - | hydroquinone: 4,4'-dihydroxydiphenylsulfone=87:13 | 0.72 | 82 | 0.018 |
| 10 | 220.2 | - | - | 325.3 | bisphenol A diglycidyl ether *1 | 188.0 | hydroquinone: bisphenol A = 86:14 | 0.67 | 67 | 0.035 |

Table 4 (continued)

| Ex ample | Properties of press sheet | | | | | | |
|---|---|---|---|---|---|---|---|
| | Surface resist- ance | Dielec- tric con- stant | Dielec- tric loss tangent | Tensile strength at break | Elon- gation | Tensile modulus | Carbon dioxide perme- ation coef- ficient |
| 8 | $1.5x10^{17}$ | 4.0 | 0.021 | 490 | 27 | 38000 | 1.1 |
| 9 | $5x10^{16}$ | 4.4 | 0.023 | 590 | 21 | 42000 | 1.2 |
| 10 | $7x10^{16}$ | 4.4 | 0.025 | 400 | 42 | 26000 | 1.6 |

| | Properties of biaxially stretched film | | | | | | |
|---|---|---|---|---|---|---|---|
| | Surface resist- ance | Dielec- tric con- stant | Dielec- tric loss tangent | Tensile strength at break | Elon- gation | Tensile modulus | Carbon dioxide perme- ation coef- ficient |
| | $1.5x10^{17}$ | 4.0 | 0.021 | 700 | 15 | 47000 | 1.0 |
| | $7x10^{16}$ | 4.5 | 0.024 | 780 | 16 | 49000 | 1.3 |
| | $8x10^{16}$ | 4.3 | 0.023 | 450 | 28 | 34000 | 1.5 |

EXAMPLES 11-12

Hydroquinonepolyhydroxypolyethers were produced as in Example 4 except that the amount of the hydroquinone diglycidyl ether was changed as shown in Table 5 and the monohydric phenols described in Table 5 were used as a molecular weight controlling agent. The properties of the resulting hydroquinone polyhydroxypolyethers are shown in Table 5.

Press sheets and biaxially stretched films were prepared from the resulting hydroquinone polyhydroxypolyethers as in Example 4. The properties of the press sheets and biaxially stretched sheets are shown in Table 5.

Table 5

| Example | Amount of hydroquinone diglycidyl ether (parts) | Monohydric phenol | | Properties of polyhydroxy polyether | | | Properties of press sheet | | |
|---|---|---|---|---|---|---|---|---|---|
| | | Kind | Amount (part) | Intrinsic viscosity | Glass transition temperature | Non-ionic organic chlorine content | Surface resistance | Dielectric constant | Dielectric loss tangent |
| 11 | 445.6 | p-tert.-butylphenol | 6.0 | 0.80 | 61 | 0.022 | $3.0x10^{17}$ | 4.2 | 0.022 |
| 12 | 445.6 | p-cumylphenol | 8.5 | 0.84 | 62 | 0.023 | $2.2x10^{17}$ | 4.3 | 0.022 |

| Properties of press sheet | | | | Properties of biaxially stretched film | | | | | | |
|---|---|---|---|---|---|---|---|---|---|---|
| Tensile strength at break | Elongation | Tensile modulus | Carbon dioxide permeation coefficient | Surface resistance | Dielectric constant | Dielectric loss tangent | Tensile strength at break | Elongation | Tensile modulus | Carbon dioxide permeation coefficient |
| 430 | 70 | 28000 | 1.0 | $2.6x10^{17}$ | 4.1 | 0.023 | 480 | 36 | 34000 | 0.92 |
| 430 | 70 | 29000 | 0.97 | $2.5x10^{17}$ | 4.2 | 0.021 | 480 | 33 | 34000 | 0.95 |

EXAMPLE 13

A reactor equipped with a stirring device and a refluxing device was charged with 2,202 parts of hydroquinone, 4,467 parts of hydroquinone diglycidyl ether (same as in Example 1), 13 parts of a 20% aqueous solution of tetraethyl ammonium hydroxide and 169 parts of cyclohexanone. The inside of the reactor was fully purged with nitrogen, and the reaction was carried out at about 120°C for about 2 hours in an atmosphere of nitrogen with stirring. Then, 22 parts of p-cumylphenol was further added, and the reaction was carried out at about 130°C for about 1 hour. With the lapse of the reaction time, the viscosity of the reaction system was seen to rise. The reaction mixture was withdrawn in strand form from the reactor, cooled by immersion in water, and cut to pellets. The pellets were then dried at about 50°C under reduced pressure, and extruded by a vent-equipped twin-screw extruder (the same as that used in Example 1) at a barrel temperature of about 160 to about 240°C under reduced pressure with a residence time of about 20 minutes while removing the cyclohexanone solvent from the vent. The extrudate was cooled by immersion in air, and cut to pellets. The resulting polyhydroxypolyether had an intrinsic viscosity [$\eta$] of 0.98 dl/g, a glass transition temperature of 63°C and a nonionic organic chlorine content of 0.022% by weight.

The polymer was compression-molded as in Example 1 to prepare a press sheet having a thickness of about 100 micrometers. The press sheet was colorless and had excellent transparency.

The electrical properties of the press sheet were measured. It had a surface resistance of 2.1 x $10^{17}$ ohms, a dielectric constant at $10^6$ of 4.3, and a dielectric loss tangent at $10^6$ Hz of 0.024.

The mechanical properties of the press sheet were measured. It had a tensile strength at break of

440 $kg/cm^2$, a tensile elongation at break of 70%, and a tensile modulus of 29,000 $kg/cm^2$, showing excellent strength.

The gas barrier property of the press sheet was also examined. It had a coefficient of carbon dioxide permeation of 0.96 $ml.mm/m^2.day.atm$ and a coefficient of oxygen gas permeation of 0.26 $ml.mm/m,^2.day.atm$.

The press sheet was left to stand for one day in a stream of air having a saturated humidity at room temperature. Its transparency was not at all reduced. When this press sheet was immersed overnight in water at room temperature, no phenomenon of loss of transparency was observe.

When the press sheet was simultaneously stretched to 3 times both in the longitudinal and transverse directions as in Example 1, a biaxially stretched film having a thickness of about 11 micrometers could be produced. The properties of the biaxially stretched film were as follows:-

Surface resistance: 1.9 x $10^{17}$ ohms
Dielectric constant at $10^6$ Hz: 4.2
Dielectric loss tangent at $10^6$ Hz: 0.021
Tensile strength at break: 510 $kg/cm^2$
Elongation: 30 %
Tensile modulus: 33,000 $kg/cm^2$
$CO_2$ permeation coeficient: 0.90 $ml.mm/m^2.day.atm$.
$O_2$ permeation coefficient: 0.22 $ml.mm/m^2.day.atm$.

EXAMPLES 14-15

Pellets of hydroquinone polyhydroxypolyethers were produced as in Example 13 except that the cyclohexanone solvent was not used; the amounts of the hydroquinone diglycidyl ether and p-cumylphenol were changed as indicated in Table 6; and the reaction conditions in the reactor and the operating conditions for the twin crew extruder were changed as indicated in Table 6. The intrinsic viscosities [$\eta$], glass transition temperatures

and nonionic organic chlorine contents of the resulting polyhydroxypolyethers are shown in Table 6.

Press sheets and biaxially stretched films were produced as in Exampel 13 from the hydroquinone polyhydroxypolyethers. The properties of the resulting press sheets and biaxially stretched films are shown in Table 6.

Table 6

| Example | Amount of hydroquinone diglycidyl ether (parts) | Amount of p-cumylphenol (part) | Reaction conditions | | | | Operating conditions of twin-screw extruder | | |
|---|---|---|---|---|---|---|---|---|---|
| | | | Initial stage | | Later stage | | Barrel temperature | Average residence time | Pressure reduction of vent |
| | | | Temp. (°C) | Time (hr) | Temp. (°C) | Time (hr) | | | |
| 14 | 4467 | 11 | 120 | 0.5 | 130 | 0.2 | 160-240 | 20 | yes |
| 15 | 4456 | 0 | 120 | 0.5 | 130 | 0.2 | 160-240 | 25 | yes |

| Properties of polyhydroxy polyether | | | Properties of press sheet | | | | | | |
|---|---|---|---|---|---|---|---|---|---|
| Intrinsic viscosity | Glass transition temperature | Non-ionic organic chlorine content | Surface resistance | Dielectric constant | Dielectric loss tangent | Tensile strength at break | Elongation | Tensile modulus | Carbon dioxide permeation coefficient |
| 1.24 | 63 | 0.021 | $1.0x10^{17}$ | 4.2 | 0.023 | 500 | 54 | 33000 | 0.90 |
| 1.59 | 64 | 0.021 | $1.4x10^{17}$ | 4.2 | 0.024 | 690 | 23 | 43000 | 0.93 |

- to be continued -

Table 6 (continued)

| | Properties of biaxially stretched film | | | | | | | |
|---|---|---|---|---|---|---|---|---|
| | Surface resist-ance | Dielec-tric con-stant | Dielec-tric loss tangent | Tensile strength at break | Elon-gation | Tensile modulus | Carbon dioxide perme-ation coef-ficient | Oxygen perme-ation coef-ficient |
| | $1.4x10^{17}$ | 4.1 | 0.023 | 610 | 18 | 42000 | 0.82 | 0.19 |
| | $1.7x10^{17}$ | 4.2 | 0.022 | 640 | 14 | 48000 | 0.80 | 0.20 |

EXAMPLES 16-18

Pellets of polyhydroxypolyethers were produced in the same way as in Example 13 except that p-cumylphenol was not used, the aromatic diols indicated in Table 7 were used instead of hydroquinone, and the diglycidyl ethers of aromatic diols indicated in Table 7 were used instead of hydroquinone diglycidyl ether. The aromatic diol proportions, intrinsic viscosities [η], glass transition temperatures and nonionic organic chlorine contents of the resulting polyhydroxypolyethers are shown in Table 7.

Press sheets and biaxially stretched films were produced from the polyhydroxypolyethers in the same way as in Example 13. The properties of the resulting press sheets and biaxially stretched films are shown in Table 7.

Table 7

| Example | Aromatic diol | | | Diglycidyl ether of aromatic diol | | | Properties of polyhydroxy polyether | | | |
|---|---|---|---|---|---|---|---|---|---|---|
| | Amount of hydroquinone (parts) | Other aromatic diol | | Amount of hydroquinone diglycidyl ether (parts) | Other diglycidyl ether | | Mole ratio of aromatic diols | Intrinsic viscosity | Glass transition temperature | Non-ionic organic chlorine content |
| | | Kind | Amount (part) | | Kind | Amount (part) | | | | |
| 16 | 1652 | p,p-biphenol | 931 | 4456 | - | - | hydroquinone: p,p'-biphenol =87:13 | 1.38 | 74 | 0.021 |
| 17 | 1652 | 4,4'-dihydroxydiphenylsulfone | 1251 | 4456 | - | - | hydroquinone: 4,4'-dihydroxydiphenylsulfone=87:13 | 1.22 | 84 | 0.019 |
| 18 | 2202 | - | - | 3342 | bisphenol A diglycidyl ether *1 | 1880 | hydroquinone: bisphenol A = 86:14 | 0.91 | 68 | 0.035 |

- to be continued -

Table 7 (continued)

| Example | Properties of press sheet | | | | | | |
|---|---|---|---|---|---|---|---|
| | Surface resistance | Dielectric constant | Dielectric loss tangent | Tensile strength at break | Elongation | Tensile modulus | Carbon dioxide permeation coefficient |
| 16 | $1.8 \times 10^{17}$ | 4.0 | 0.020 | 610 | 21 | 42000 | 1.0 |
| 17 | $6 \times 10^{16}$ | 4.6 | 0.024 | 760 | 15 | 48000 | 1.4 |
| 18 | $6 \times 10^{16}$ | 4.4 | 0.024 | 420 | 35 | 31000 | 1.7 |

| | Properties of biaxially stretched film | | | | | | |
|---|---|---|---|---|---|---|---|
| | Surface resistance | Dielectric constant | Dielectric loss tangent | Tensile strength at break | Elongation | Tensile modulus | Carbon dioxide permeation coefficient |
| | $9 \times 10^{16}$ | 4.0 | 0.020 | 720 | 17 | 48000 | 0.93 |
| | $5 \times 10^{16}$ | 4.4 | 0.023 | 850 | 15 | 51000 | 1.3 |
| | $7 \times 10^{16}$ | 4.2 | 0.024 | 480 | 28 | 35000 | 1.7 |

EXAMPLE 19

The same polyhydroxypolyether as obtained in Example 1 was extruded by an extruder equipped with a T-die at a barrel temperature of about 160 to about 250°C to produce an extruded sheet having a thickness of about 80 microns. The extruded sheet had a surface resistance of 2.7 x $10^{17}$ ohms, a dielectric constant at $10^6$ of 4.1 and a dielectric loss tangent at $10^6$ Hz of 0.022. The mechanical properties of the extruded sheet were also measured. It had a tensile strength at break of 500 kg/$cm^2$ (flowing direction) to 430 kg/$cm^2$ (perpendicular to the flowing direction), an elongation of 80% (flowing direction) to 68% (perpendicular to the flowing direction) and a tensile modulus of 31,000 kg/$cm^2$ (flowing direction) to 29,000 kg/$cm^2$ (perpendicular to the flowing direction). The extruded sheet has a coefficient of carbon dioxide permeation of 0.95 ml.mm/$m^2$.day.atm.

By using a biaxial stretching device, the extruded sheet was stretched at a temperature of about 70 to 90°C to two times in the transverse direction (perpendicular to the flow), and then to three times in the longitudinal direction (flowing direction) to form a biaxially stretched film having an average thickness of about 13 micrometers.

The stretched film had a surface resistance of 2.5 x $10^{17}$ ohms, a dielectric constant at $10^6$ of 4.0 and a dielectric loss tangent at $10^6$ Hz of 0.021. The mechanical properties of the stretched film were also measured. It had a tensile strength at break of 660 kg/$cm^2$ (flowing direction) to 560 kg/$cm^2$ (perpendicular to the flowing direction), an elongation of 31% (flowing direction) to 27% (perpendicular to the flowing direction) and a tensile modulus of 41,000 kg/$cm^2$ (flowing direction) to 39,000 kg/$cm^2$ (perpendicular to the flowing direction). The stretched film had a coefficient of carbon dioxide

permeation of 0.88 ml.mm/$m^2$.day.atm.

EXAMPLE 20

The same polyhydroxypolyether as obtained in Example 14 was extruded in the same way as in Example 19 to produce an extruded sheet having a thickness of about 80 microns. The extruded sheet had a surface resistance of 2.8 x $10^{17}$ ohms, a dielectric constant at $10^6$ of 4.1 and a dielectric loss tangent at $10^6$ Hz of 0.025. The mechanical properties of the extruded sheet were also measured. It had a tensile strength at break of 520 kg/$cm^2$ (flowing direction) to 470 kg/$cm^2$ (perpendicular to the flowing direction), an elongation of 83% (flowing direction) to 72% (perpendicular to the flowing direction) and a tensile modulus of 33,000 kg/$cm^2$ (flowing direction) to 32,000 kg/$cm^2$ (perpendicular to the flowing direction). The extruded sheet has a coefficient of carbon dioxide permeation of 0.93 ml.mm/$m^2$.day.atm.

By using a biaxial stretching device, the extruded sheet was stretched in the same way as in Example 19 to two times in the transverse direction (perpendicular to the flow), and then to three times in the longitudinal direction (flowing direction) to form a biaxially stretched film having an average thickness of about 13 micrometers.

The stretched film had a surface resistance of 2.8 x $10^{17}$ ohms, a dielectric constant at $10^6$ of 4.0 and a dielectric loss tangent at $10^6$ Hz of 0.021. The mechanical properties of the stretched film were also measured. It had a tensile strength at break of 680 kg/$cm^2$ (flowing direction) to 560 kg/$cm^2$ (perpendicular to the flowing direction), an elongation of 28% (flowing direction) to 26% (perpendicular to the flowing direction) and a tensile modulus of 42,000 kg/$cm^2$ (flowing direction) to 41,000 kg/$cm^2$ (perpendicular to the flowing direction). The extruded sheet has a coefficient of carbon dioxide permeation of 0.87 ml.mm/$m^2$.day.atm.

EXAMPLE 21

Dry polyethylene terephthalate (Mitsui PET J125, a product of Mitsui PET Resin Co., Ltd.) was melted in an extruder. Separately, the hydroquinone polyhydroxypolyether obtained in Example 1 was melted in another extruder. The molten resins were fed into a T-die of the two-kind three-layer type to form a co-extruded sheet composed of polyethylene terephthalate/hydroquinone polyhydroxypolyetehr/polyethylene terephthalate (thickness about 40 micrometers/20 micrometers/40 micrometers). The co-extruded sheet was transparent, and the adhesion between the polyethylene terephthalate layer and the hydroquinone polyhydroxypolyether layer was good.

The multilayer co-extruded sheet was successively stretched in a biaxially stretching device as in Example 12 first to two times in the transverse direction (perpendicular to the flow) and then to three times in the longidudinal direction (flowing direction) at a temperature of about 80 to 100°C to prepare a biaxially stretched film having an average thickness of about 17 micrometers. The adhesion between the hydroquinone polyhydroxypolyether and the polyethylene terephthalate layer in the biaxially stretched film was good. The hydroquinone polyhydroxypolyether layer had a thickness of about 3 micrometers, and the polyethylene terephthalate layer had a thickness of about 7 micrometers.

The biaxially stretched laminated film had a tensile strength at break of 1,300 kg/cm$^2$ (flowing direction) to 1,200 kg/cm$^2$ (perpendicular to the flowing direction), an elongation of 65% (flowing direction) to 40% (perpendicular to the flowing direction), and a tensile modulus of 41,000 kg/cm$^2$ (flowing direction) to 38,000 kg/cm$^2$ (perpendicular to the flowing direction). The biaxially stretched film had a coefficient of carbon dioxide permeation of 4.0 ml.mm/m$^2$.day.atm.

EXAMPLE 22

The press sheet of the polyhydroxypolyether obtained in Example 14 and a press sheet having a thickness of about 100 micrometers obtained by compression-molding the same polyethylene terephthalate as used in Example 21 at about 270°C under a pressure of 50 kg/$cm^2$ were laid one on top of the other and consolidated at about 270°C under a pressure of 50 kg/$cm^2$ to prepare a multilayer press sheet. In the multilayer press sheet, the adhesion between the polyhydroxypolyether layer and the polyethylene terephthalate layer was good.

The multilayer press sheet was biaxially stretched simultaneously at 80 to 95°C under the same conditions as in Example 1 to produce a biaxially stretched film having an average thickness of 17 microns. In the biaxially stretched film, the polyhydroxypolyether layer had a thickness of about 6 micrometers and the polyethylene terephthalate layer had a thickness of about 9 micrometers. The adhesion between the polyhydroxypolyether layer and the polyethylene terephthalate layer in the biaxially stretched film was also good.

The laminated biaxially stretched film had a tensile strength at break of 1,020 kg/$cm^2$, an elongation of 40%, a tensile modulus of 29,000 kg/$cm^2$, and a coefficient of carbon dioxide permeation of 1.9 ml.mm/$m^2$.day.atm.

COMPARATIVE EXAMPLE 3

The same dry polyethylene terephthalate as used in Example 21 was compression-molded to form a sheet having a thickness of about 100 micrometers. The press sheet had a tensile strength at break of 475 kg/$cm^2$, an elongation of 80%, a coefficient of carbon dioxide permeation of 25 ml.mm/$m^2$.day.atm. and a coefficient of oxygen permeation of 4.6 ml.mm/$m^2$.day.atm.

The press sheet was simultaneously stretched biaxially in the transverse direction and the longitudinal

direction as in Example 22 to produce a biaxially stretched film having a thickness of about 11 micrometers. The biaxially stretched film had a tensile strength at break of 1,530 kg/$cm^2$, an elongation of 50%, a tensile modulus of 46,000 kg/$cm^2$, a coefficient of carbon dioxide permeation of 16 ml.mm/$m^2$.day.atm. and a coefficient of oxygen permeation of 2.5 ml.mm/$m^2$.day.atm.

EXAMPLE 23

One hundred parts of polyethylene terephthalate (Mitsui PET J125, a product of Mitsui PET Resin Co., Ltd.) dried at 150°C for 10 hours was mixed with 10 parts of the polyhydroxypolyether obtained in Example 1 and dried in vacuum at 50°C for 12 hours. The mixture was melt-extruded at a molding temperature of about 250 to 290°C by an extruder. The extrudate was cooled and cut to pellets of a composition of the polyhydroxypolyether and polyethylene terephthalate. The pellets were compression-molded to form a press sheet having a thickness of about 100 micrometers. The resulting press sheet was colorless and transparent. The press sheet had a tensile %strength at break of 455 kg/$cm^2$, an elongation of 88%, a coefficient of carbon dioxide permeation of 18 ml.mm/$m^2$/day.atm. and a coefficient of oxygen permeation of 3.5 ml.mm/$m^2$.day.atm.

By using a biaxial stretching device, the press sheet was stretched to 3 times simultaneously in the longitudinal and transverse directions to produce a biaxially stretched film. The resulting biaxially stretched film had a thickness of about 11 micrometers and in the uniformly stretched state without an unevenness in thickness. The biaxially stretched film had a tensile strength at break of 1,500 kg/$cm^2$, an elongation of 49%, a tensile modulus of 38,000 kg/$cm^2$, and a coefficient of carbon dioxide permeation of 8.2 ml.mm/$m^2$.day.atm.

EXAMPLES 24-30

Press sheets having a thickness of about 100 micrometers were prepared as in Example 23 except that compositions prepared by using the polyethylene terephthalates or polyhydroxypolyethers indicated in Table 8 instead of the polyethylene terephthalate or polyhydroxypolyether in Example 23. The properties of the press sheets are shown in Table 8.

Biaxially stretched films were produced by biaxially stretching the press sheets to three times simultaneously in the longitudinal and transverse directions. The stretched films had the average thicknesses shown in Table 8 and were in the uniformly stretched state. The properties of the biaxially stretched films are also shown in Table 8.

Table 8

| Example | Composition | | | Properties of press sheet | | |
|---|---|---|---|---|---|---|
| | Starting materials | | Amount of polyhydroxy polyether per 100 parts of polyethylene terephthalate (parts) | Tensile strength at break | Elongation | Carbon dioxide permeation coefficient |
| | Polyethylene terephthalate *1 | Polyhydroxy polyether | | | | |
| 24 | Mitsui PET J-025 | Ex. 4 | 10 | 420 | 68 | 19 |
| 25 | Mitsui PET J-025 | Ex. 5 | 10 | 415 | 71 | 18 |
| 26 | Mitsui PET J-125 | Ex. 13 | 10 | 460 | 85 | 18 |
| 27 | Mitsui PET J-125 | Ex. 14 | 10 | 480 | 75 | 18 |
| 28 | Mitsui PET J-125 | Ex. 14 | 40 | 475 | 60 | 12 |
| 29 | Mitsui PET J-125 | Ex. 14 | 80 | 475 | 52 | 9.4 |
| 30 | Mitsui PET J-135 | Ex. 15 | 10 | 560 | 56 | 18 |

*1 Product of Mitsui PET Resin Co., Ltd.

- to be continued -

Table 8 (continued)

| | Properties of biaxially stretched film | | | | |
|---|---|---|---|---|---|
| | Average thick-ness (μ) | Tensile strength at break | Elon-gation | Tensile modulus | Carbon dioxide permeation coefficient |
| | 11 | 1410 | 53 | 35000 | 8.1 |
| | 11 | 1410 | 47 | 35000 | 8.1 |
| | 11 | 1520 | 48 | 39000 | 8.4 |
| | 11 | 1650 | 42 | 47000 | 8.2 |
| | 11 | 1540 | 32 | 49000 | 5.5 |
| | 11 | 1400 | 27 | 49000 | 2.5 |
| | 11 | 1710 | 35 | 64000 | 8.3 |

COMPARATIVE EXAMPLE 4

The same polyethylene terephthalate as used in Example 23 was compression-molded to prepare a press sheet having a thickness of about 100 microns. The press sheet had a tensile strength at break of 475 $kg/cm^2$, an elongation of 80%, and a coefficient of carbon dioxide permeation of 25 $ml.mm/m^2.day.atm$.

The press sheet was biaxially stretched to 3 times simultaneously in the longitudinal and transverse directions as in Example 23 to produce a biaxially stretched film having a thickness of about 11 microns. The biaxially stretched film had a tensile strength of 1,530 $kg/cm^2$, an elongation of 50%, a tensile modulus of 46,000 $kg/cm^2$, and a coefficient of carbon dioxide permeation of 16 $ml.mm/m^2.day.atm$.

EXAMPLES 31-33

Press sheets having an average thickness of about 100 microns were prepared from a composition of polyethylene terephthalate and polyhydroxypolyether (weight ratio 100:10) in the same way as in Example 23 except that the polyethylene terephthalates and polyhydroxypolyethers described in Table 9 were used instead of the polyethylene terephthalate and polyhydroxypolyether used in Example 23. The properties of the press sheets are shown in Table 9.

The presss sheets were each biaxially stretched to 3 times simultaneously in the longitudinal and transverse directions using a biaxial stretching device as in Example 1 to produce biaxially stretched films. The films had a thickness of about 11 micrometers, and their properties are shown in Table 9.

Table 9

| Example | Constituent | | Properties of press sheet | | | Properties of biaxially stretched film | | | |
|---|---|---|---|---|---|---|---|---|---|
| | Polyethylene terephthalate *1 | Polyhydroxy polyether | Tensile strength at break | Elongation | Carbon dioxide permeation coefficient | Tensile strength at break | Elongation | Tensile modulus | Carbon dioxide permeation coefficient |
| 31 | Mitsui PET J-135 | Ex. 4 | 580 | 68 | 18 | 1730 | 30 | 67000 | 8.6 |
| 32 | Mitsui PET J-135 | Ex. 5 | 570 | 65 | 19 | 1710 | 22 | 67000 | 10 |
| 33 | Mitsui PET J-125 | Ex. 6 | 455 | 74 | 20 | 1460 | 41 | 39000 | 12 |

*1 Product of Mitsui PET Resin Co., Ltd.

EXAMPLE 34

The same mixture of polyethylene terephthalate and polyhydroxypolyether as used in Example 27 was extruded by an extruder equipped with a T-die at a barrel temperature of about 160 to about 280°C to produce an extruded sheet having a thickness of about 80 microns. The extruded sheet had a tensile strength at break of 496 $kg/cm^2$ (flowing direction) to 445 $kg/cm^2$ (perpendicular to the flowing direction), an elongation of 85% (flowing direction) to 63% (perpendicular to the flowing direction), and a carbon dioxide permeation of 17 $ml.mm/m^2.day.atm$.

By using a biaxial stretching device, the extruded sheet was stretched at a temperature of about 85 to 100°C to two times in the transverse direction (perpendicular to the flow), and then to three times in the longitudinal direction (flowing direction) to form a biaxially stretched film having an average thickness of about 13 micrometers.

The stretched film had a tensile strength at break of 1,680 $kg/cm^2$ (flowing direction) to 1,540 $kg/cm^2$ (perpendicular to the flowing direction), an elongation of 47% (flowing direction) to 33% (perpendicular to the flowing direction) and a tensile modulus of 51,000 $kg/cm^2$ (flowing direction) to 44,000 $kg/cm^2$ (perpendicular to the flowing direction). The biaxially stretched film had a coefficient of carbon dioxide permeation of 7.9 $ml.mm/m^2.day.atm$.

EXAMPLE 35

The mixture of polyethylene terephthalate and polyhydroxypolyether in Example 27 was injection-molded at a molding temperature of about 270°C using an injection molding machine to form a preform (cold parison) having a thickness of 3.2 mm. The preform was stretched biaxially to about 2.5 times in the longitudinal direction and to about 4 times in the transverse direction by a biaixally stretching blow-molding machine to produce a stretched

bottle having an inner capacity of about 1 liter. The stretched bottle had a carbon dioxide permeability of 2.1 ml/day.bottle.atm.

COMPARATIVE EXAMPLE 5

The polyethylene terephthalate used in Example 23 was injection-molded to produce a preform composed only of a polyethylene terephthalate layer having the same thickness (about 3.2 mm) as the preform of Example 35. The preform was stretch blow-molded in the same way as in Example 32 to produce a stretched bottle having an inner capacity of about 1 liter. The stretched bottle had a carbon dioxide permeability of 4.0 ml/day.bottle.atm.

EXAMPLE 36

The same polyethylene terephthalate as used in Example 21 and dried at 150°C for 10 hours was compression-molded at about 260°C to product a press sheet having a thickness of about 100 micrometers. Separately, a mixture of 100 parts of the above polyethylene terephthalate and 40 parts of the polyhydroxypolyether of Example 1 vacuum-dried at 50°C for 12 hours was melt-extruded from another extruder to form pellets of the above mixture. The pellets were compression-molded at about 260°C to produce a press sheet having a thickness of about 100 micrometers.

The press sheet of the polyethylene terephthalate and the press sheet of the above mixture of polyethylene terephthalate and the polyhydroxypolyether were laid one on top of the other, and compression-molded at about 260°C to prepare a laminated sheet having a thickness of about 150 micrometers. The adhesion between the polyethylene terephthalate layer and the composition layer in the laminated sheet was good. The laminated sheet had a tensile strength of 440 $kg/cm^2$, an elongation of 80%, and a coefficient of carbon dioxide permeation of 18 $ml.mm/m^2$.day.atm.

By using a biaxially stretching device, the

laminated sheet was stretched to three times simultaneously in the longitudinal and transverse directions to produce a biaxially stretched film. The biaxially stretched film had a thickness of about 17 micrometers and was in the uniformly stretched state. The adhesion between the polyethylene terephthalate layer and the composition layer of the biaxially stretched film was good. The biaxially stretched film had a tensile strength at break of 1,500 $kg/cm^2$, an elongation of 58%, a tensile modulus of 44,000 $kg/cm^2$, and a coefficient of carbon dioxide gas permeation of 5.7 $ml.mm/m^2.day.atm$.

EXAMPLES 37-42

Laminated sheets having a thickness of about 150 micrometers were produced as in Example 21 except that the polyethylene terephthalates or the composition of polyethylene terephthalate and polyhydroxypolyether described in Table 8 were used instead of polyethylene terephthalate or composition in Example 36. In all of the laminated sheets, the adhesion between the polyethylene terephthalate layer and the composition layer was good. The properties of the laminated sheets are shown in Table 10.

The laminated sheets were each stretched biaxially at the same time as in Example 21 at the stretch ratios indicated in Table 10 to form biaxially stretched films. The thicknesses of the biaxially stretched films are shown in Table 10, and the films were in the uniformly stretched state. In these biaxially stretched films, the adhesion between the polyethylene terephthalate layer and the composition layer was good. The properties of the biaxially stretched films are shown in Table 10.

Table 10

| Example | Polyethylene terephthalate *1 | Composition | | | Properties of press sheet | | |
|---|---|---|---|---|---|---|---|
| | | Polyethylene terephthalate *1 | Polyhydroxy polyether | Amount of polyhydroxy polyether per 100 parts of polyethylene terephthalate (parts) | Tensile strength at break | Elongation | Carbon dioxide permeation coefficient |
| 37 | Mitsui PET J-025 | Mitsui PET J-125 | Ex. 5 | 40 | 420 | 74 | 16 |
| 38 | Mitsui PET J-125 | Mitsui PET J-025 | Ex. 13 | 40 | 445 | 84 | 17 |
| 39 | Mitsui PET J-125 | Mitsui PET J-125 | Ex. 14 | 10 | 478 | 88 | 21 |
| 40 | Mitsui PET J-125 | Mitsui PET J-125 | Ex. 14 | 40 | 463 | 74 | 17 |
| 41 | Mitsui PET J-125 | Mitsui PET J-125 | Ex. 14 | 80 | 466 | 77 | 14 |
| 42 | Mitsui PET J-135 | Mitsui PET J-135 | Ex. 15 | 40 | 595 | 96 | 17 |

*1 Product of Mitsui PET Resin Co., Ltd.

- to be continued -

Table 10 (continued)

| | Properties of biaxially stretched film | | | | | |
|---|---|---|---|---|---|---|
| | | Properties | | | | |
| Strech ratio | Average thick-ness (μ) | Tensile strength at break | Elon-gation | Tensile modulus | Carbon dioxide permeation coefficient |
| 3x3 | 17 | 1500 | 53 | 44000 | 5.5 |
| 3x3 | 17 | 1570 | 50 | 46000 | 5.9 |
| 3x3 | 17 | 1580 | 53 | 49000 | 12 |
| 3x3 | 17 | 1540 | 49 | 52000 | 5.7 |
| 2.5x2.5 | 24 | 1490 | 41 | 55000 | 4.4 |
| 3x3 | 17 | 1770 | 53 | 54000 | 5.7 |

EXAMPLES 43-45

In the same way as in Example 21, laminated sheets having an average thickness of about 150 micrometers composed of a polyethylene terephthalate layer and a composition layer were prepared except that the polyethylene terephthalates indicated in Table 11 were used instead of the polyethylene terephthalate in Example 21, and the polyethylene terephthalates and polyhydroxypolyethers indicated in Table 11 were used (weight ratio 100:40) instead of those used in Example 21. In the laminated sheets obtained, the adhesion between the polyethylene terephthalate layer and the composition layer was good, and the properties of the laminated sheets are shown in Table 11.

The laminated sheets were simultaneously stretched to 3 times both in the longitudinal and transverse directions by using a biaxial stretching device as in Example 21 to produce biaxially stretched films. The biaxially stretched films had an average thickness of about 17 microns and were in the uniformly stretched state. The adhesion between the polyethylene terephthalate layer and the composition layer was good. The properties of the biaxially stretched films are shown in Table 11.

Table 11

| Example | Polyethylene terephthalate *1 | Constituent | | Properties of press sheet | | | Properties of biaxially stretched film | | | |
|---|---|---|---|---|---|---|---|---|---|---|
| | | Polyethylene terephthalate *1 | Poly-hydroxy polyether | Tensile strength at break | Elon-gation | Carbon dioxide permeation coefficient | Tensile strength at break | Elon-gation | Tensile modulus | Carbon dioxide permeation coefficient |
| 43 | Mitsui PET J-135 | Mitsui PET J-135 | Ex. 16 | 585 | 80 | 17 | 1760 | 46 | 58000 | 6.0 |
| 44 | Mitsui PET J-135 | Mitsui PET J-135 | Ex. 17 | 560 | 76 | 18 | 1760 | 49 | 59000 | 6.4 |
| 45 | Mitsui PET J-125 | Mitsui PET J-125 | Ex. 18 | 475 | 85 | 20 | 1490 | 55 | 46000 | 7.1 |

*1 Product of Mitsui PET Resin Co., Ltd.

EXAMPLE 46

The same polyethylene terephthalate as used in Example 21 was injection-molded, and then the polyhydroxypolyether obtained in Example 14 was again injection-molded to prepare a preform composed of the polyethylene terephthalate layer and the polyhydroxypolyether layer each layer having a thickness of 1.6 mm. The preform was then heated to 85 to 95°C by using a far infrared heating device and stretched to about 2.5 times longitudinally and to about 4.3 times transversely by a stretch blow-molding machine to produce a stretched bottle having an inner capacity of about 1 liter in which in the smallest wall thickness portion, the polyethylene terephthalate layer had a thickness of about 150 micrometers and the polyhydroxypolyether layer had a thickness of bout 150 micrometers. The stretched bottle was found to have a carbon dioxide permeability of 0.55 ml/day.bottle.atm., and an oxygen permeability of 0.17 ml/day.bottle.atm.

COMPARATIVE EXAMPLE 6

The same polyethylene terephthalate as used in Example 46 was injection-molded to produce a preform having the same thickness (about 3.2 mm) as the preform of Example 46. The preform was stretch blow-molded as in Example 46 to produce a stretched bottle having an inner capacity of about 1 liter in which the smallest wall thickness portion had a thickness of about 300 micrometers. The bottle had a carbon dioxide permeability of 4.0 ml/day.bottle/atm and an oxygen permeability of 1.1 ml/day.bottle.atm.

EXAMPLE 47

The polyethylene terephthalate in Example 21 was melted in one extruder. The polyhydroxypolyether of Example 14 was melted in another extruder. These melts were respectively fed into a pipe die of the two-kind three-layer type to extrude a three-layer pipe composed of polyethylene terephthalate/polyhydroxypolyether/poly-

ethylene terephthalate (thickness about 1.2 mm/1.2 mm/1.2 mm). The pipe was cooled with water to produce a three-layer pipe having an outside diameter of 24.8 mm and a thickness of 3.6 mm. The pipe was cut and one end was heat-melted to form a bottom portion. The other end was similarly heat-melted to form a spigot to produce a preform having a total length of 16.5 cm and a weight of about 50 g. The preform was then biaxially stretched to 2.5 times longitudinally and to 4 times transversely by a biaxial stretch blow-molding machine (Model LB01 made by Corpoplast Co.) to obtain a 1.5-liter multilayer container (polyethylene terephthalate/polyhydroxypolyether/polyethylene terephthalate=about 120 micrometers/about 120 micrometers/about 120 micrometers). The multilayer container had a carbon dioxide permeability of 0.68 ml/day.bottle.atm, and an oxygen permeability of 0.22 ml/day.bottle.atm. Water at $0^{o}C$ was filled in the container, and the container was subjected to a falling test. When it was let fall from a height of 1 meter, it did not break, nor was there observed delamination of the layers.

EXAMPLE 48

The polyethylene terephthalate in Example 21 was melted at a molding temperature of about $270^{o}C$ in one injecting molding machine. Separately, the mixture of polyethylene terephthalate and the polyhydroxyether in Example 8 was melted at a molding temperature of about $270^{o}C$ in another injection molding machine. The melts were injection molded into a single preform die to prepare a two-layer preform composed of an inside layer of polyethylene terephthalate (thickness about 1.6 mm) and an outside layer of the composition of polyethylene terephthalate and the polyhydroxypolyether. Then, by using a biaxial stretch blow-molding machine (LB01 made by Corpoplast Co.), the preform was biaxially stretched to about 2.5 times longitudinally and to about 4 times

transversely to produce a multilayer container having an inner capacity of about 1 liter. The polyethylene terephthalate layer of the multilayer container had an average thickness of about 150 micrometers, and it was confirmed that the container was in the uniformly stretched state. The multilayer container had a carbon dioxide permeability of 1.3 ml/day.bottle.atm.

EXAMPLE 49

A reactor equipped with a stirring device and a refluxing device was charged with 220.2 parts of hydroquinone, 445.6 parts of hydroquinone diglycidyl ether (epoxy group content 8.98 eq/kg, terminal hydroxyl group content 20 eq/$10^6$ g), 1.8 parts of triphenylphosphine and 280 parts of cyclohexanone. The inside of the reactor was purged fully with nitrogen, and the reaction was carried out at 150$^{\circ}$C for about 5 hours in a nitrogen atmosphere with stirring. Furthermore, the reaction mixture was heated to 170$^{\circ}$C and reacted for about 3 hours. With the lapse of the reaction time, the viscosity of the reaction system increased. After the reaction, the reaction mixture was divided into a particulate form and poured into a large amount of acetone to precipitate the resulting polymer. The precipitate was washed with acetone, recovered by filtration, and dried under vacuum at 40$^{\circ}$C. The resulting polymer was hydroquinone polyhydroxypolyether having an intrinsic viscosity [$\eta$] of 0.98 dl/g and a glass transition temperature of 61$^{\circ}$C.

EXAMPLES 50-58

Hydroquinone polyhydroxypolyethers were produced in the same way as in Example 49 except that the catalysts indicated in Table 12 were used instead of triphenylphosphine and the reaction conditions were changed as indicated in Table 12. The intrinsic viscosities and glass transition temperatures of the resulting hydroquinone polyhydroxypolyethers are shown in Table 12.

Table 12

| Example | Catalyst | | Polymerization conditions | | | | Properties of the hydroquinone polyhydroxy polyether | |
|---|---|---|---|---|---|---|---|---|
| | Kind | Amount (parts) | Initial stage Temperature (°C) | Initial stage Time (hr) | Later stage Temperature (°C) | Later stage Time (hr) | Intrinsic viscosity [η] (dl/g) | Glass transition temperature (°C) |
| 50 | Tri n-butylphosphine | 1.76 | 150 | 5.0 | 170 | 3.5 | 0.97 | 61 |
| 51 | Tetraphenylphosphonium | 3.26 | 150 | 5.0 | 170 | 3.0 | 0.92 | 60 |
| 52 | Benzyldimethylamine | 1.18 | 150 | 1.5 | -*4 | -*4 | 1.20 | 63 |
| 53 | Tri n-butylamine | 1.59 | 150 | 2.2 | -*4 | -*4 | 1.16 | 63 |
| 54 | Benzyltrimethylammonium hydroxide | 0.73*1 | 130 | 3.0 | 150 | 2.0 | 1.04 | 63 |
| 55 | Tetra n-butylammonium hydroxide | 4.51*2 | 130 | 3.0 | 150 | 1.5 | 1.25 | 64 |
| 56 | Tetraethylammonium hydroxide | 1.29*3 | 130 | 3.0 | 150 | 2.5 | 1.46 | 64 |
| 57 | Tetraphenylammonium chloride | 0.48 | 150 | 3.0 | 170 | 1.3 | 0.95 | 62 |
| 58 | Tetramethylammonium chloride | 0.19 | 150 | 3.0 | 170 | 1.3 | 1.18 | 63 |

*1: As a 40% aqueous solution
*2: As a 10% aqueous solution
*3: As a 20% aqueous solution
*4: The later stage polymerization was not conducted.

EXAMPLES 59-65

Polyhydroxypolyethers composed of hydroquinone units as main recurring units were produced in the same way as in Example 56 except that the amount of hydroquinone diglycidyl ether was changed as indicated in Table 13, the diglycidyl ethers indicated in Table 13 were used and the reaction conditions were changed as indicated in Table 13. The diol component proportions, intrinsic viscosities and glass transition temperatures of the resulting polyhydroxypolyethers are shown in Table 13.

Table 13

| Example | Diglycidyl ether: Amount of hydroquinone diglycidyl ether (parts) | Other diglycidyl ether: Kind | Other diglycidyl ether: Amount (parts) | Reaction conditions: Initial stage: Temperature (°C) | Initial stage: Time (hr) | Later stage: Temperature (°C) | Later stage: Time (hr) | Properties of the polyhydroxy polyether: Mole ratio of the diol units | Intrinsic viscosity [η] (dl/g) | Glass transition temperature (°C) |
|---|---|---|---|---|---|---|---|---|---|---|
| 59 | 334.2 | Ethylene glycol diglycidyl ether (DENACOL EX-810*) | 112.0 | 130 | 3.0 | 150 | 2.0 | Hydroquinone: ethylene glycol=83:17 | 1.23 | 60 |
| 60 | 111.4 | Ditto | 336.0 | 130 | 3.0 | 150 | 2.5 | Hydroquinone: ethylene glycol=54:46 | 0.76 | 50 |
| 61 | 334.2 | Propylene glycol diglycidyl ether (DENACOL EX-911*) | 150.0 | 130 | 3.0 | 150 | 2.0 | Hydroquinone: propylene glycol=85:15 | 1.23 | 58 |
| 62 | 334.2 | Neopentyl glycol diglycidyl ether (DENACOL EX-211*) | 140.0 | 130 | 3.0 | 150 | 2.0 | Hydroquinone: neopentyl glycol=87:13 | 1.15 | 58 |
| 63 | 111.4 | Ditto | 420.0 | 130 | 3.0 | 150 | 3.0 | Hydroquinone: neopentyl glycol=60:40 | 0.72 | 53 |
| 64 | 334.2 | Diethylene glycol diglycidyl ether (DENACOL EX-851*) | 154.0 | 130 | 3.0 | 150 | 3.0 | Hydroquinone: diethylene glycol=85:15 | 1.09 | 57 |
| 65 | 401.0 | Polyethylene glycol diglycidyl ether (DENACOL EX-841*) | 110.4 | 130 | 3.0 | 150 | 3.0 | Hydroquinone: polyethylene glycol=95:5 | 0.81 | 56 |

(*) Tradenames for products of Nagase Chemical Industry Co., Ltd.

EXAMPLES 66-67

Polyhydroxypolyethers were produced in the same way as in Example 56 except that the amount of hydroquinone used was changed as indicated in Table 14, the aromatic diols indicated in Table 14 were used, the amount of hydroquinone diglycidyl ether was changed as in Table 14, the diglycidyl ethers indicated in Table 14 were used in the amounts indicated, and the reaction conditions were changed as in Table 14. The diol component proportions, intrinsic viscosities and glass transition temperatures of the resulting polyhydroxypolyethers are shown in Table 14.

Table 14

| Example | Aromatic diol | | | Amount of hydroquinone diglycidyl ether (parts) |
|---|---|---|---|---|
| | Amount of hydroquinone (parts) | Other aromatic diol | | |
| | | Kind | Amount (parts) | |
| 66 | 165.2 | p,p'-biphenol | 93.1 | 445.6 |
| 67 | do | 4,4'-dihydroxydiphenyl sulphone | 125.1 | 445.6 |

EXAMPLES 68-69

Hydroquinone polyhydroxypolyethers were produced in the same way as in Example 56 except that the solvents indicated in Table 15 were used in the amounts indicated instead of cyclohexanone, and the reaction conditions were changed as indicated in Table 15. The intrinsic viscosities and glass transition temperatures of the resulting hydroquinone polyhydroxypolyethers are shown in Table 15.

Table 15

| Example | Solvent | | Reaction conditions | | | | Properties of hydroquinone polyhydroxy polyether | |
|---|---|---|---|---|---|---|---|---|
| | Kind | Amount (parts) | Initial stage | | Later stage | | Intrinsic viscosity [η] (dl/g) | Glass transition temperature (°C) |
| | | | Temperature (°C) | Time (hr) | Temperature (°C) | Time (hr) | | |
| 68 | Acetophenone | 280 | 130 | 3.0 | 150 | 2.5 | 1.31 | 64 |
| 69 | Diethylene glycol diethyl ether | 280 | 130 | 3.0 | 150 | 2.5 | 1.29 | 63 |

EXAMPLES 70-71

Hydroquinone polyhydroxypolyethers were produced in the same way as in Example 56 except that the amount of hydroquinone glycidyl ether was changed as indicated in Table 16. The intrinsic viscosities and glass transition temperatures of the resulting hydroquinone polyhydroxypolyethers are shown in Table 16.

Table 16

| Example | Amount of hydroquinone diglycidyl ether (parts) | Properties of hydroquinone polyhydroxy polyether | |
|---|---|---|---|
| | | Intrinsic viscosity [η] (dl/g) | Glass transition temperature (°C) |
| 70 | 444.5 | 1.00 | 62 |
| 71 | 443.4 | 0.79 | 61 |

EXAMPLES 72-73

Hydroquinone polyhydroxypolyethers were produced in the same way as in Example 56 except that the amount of hydroquinone glycidyl ether was changed as indicated in Table 17, and the terminal stabilizing agents indicated in Table 17 were used in the amounts indicated. The terminal stabilizing agents were added before the reaction mixture was heated in the later period of the reaction. The intrinsic viscosities and glass transition temperatures of the resulting hydroquinone polyhydroxypolyethers are shown in Table 17.

Table 17

| Example | Amount of hydroquinone diglycidyl ether (parts) | Terminal stabilizing agent | | Properties of hydroquinone polyhydroxy polyether | |
|---|---|---|---|---|---|
| | | Kind | Amount (parts) | Intrinsic viscosity [η] (dl/g) | Glass transition temperature (°C) |
| 72 | 446.7 | p-t-butylphenol | 1.5 | 0.98 | 62 |
| 73 | 446.7 | p-cumylphenol | 2.1 | 1.04 | 62 |

EXAMPLE 74

The same reaction as in Example 56 was carried out except that 2,202 parts of hydroquinone, 4,445 parts of the same hydroquinone diglycidyl ether as in Example 49, 13 parts of a 20% aqueous solution of tetraethyl ammonium hydroxide and 2,800 parts of cyclohexanone were used as the reaction materials, and the time of the reaction in the later stage was changed to 1.0 hour. After the reaction, the reaction mixture was withdrawn in a strand form from the reactor, cooled by immersion in water, and then cut to pellets. A portion of the pellets was treated with acetone to remove the cyclohexanone solvent, and dried in vacuum at 40°C to obtain hydroquinone polyhydroxypolyether having an intrinsic viscosity $[\eta]$ of 0.58 dl/g. The remainder of the pellets were extruded at a barrel temperature of 160 to 240°C under reduced pressure with a residence time of about 10 minutes by using a vent-equipped twin-screw extruder (made by Plastic Engineering Institute Co., Ltd.; L/D=42; screw diameter 30 mm; the screws rotating in the same direction) while removing the cyclohexanone solvent from the vent. The extrudate was cooled by immersion in water, and cut to pellets. The resulting hydroquinone polyhydroxypolyether had an intrinsic viscosity $[\eta]$ of 1.20 dl/g and a glass transition temperature of 63°C.

EXAMPLES 75-77

Pellets of a reaction mixture were obtained by carrying out the same reaction, cooling and cutting as in Example 74 except that the amounts of hydroquinone diglycidyl ether and cyclohexanone were changed as indicated in Table 18, p-cumylphenol as a terminal stabilizer in the amounts indicated in Table 7 was added to the reaction system before the temperature was elevated in the later stage of the reaction, and the reaction conditions were changed as indicated in Table 18. A portion of the pellets in Example 75 were after-treated with

acetone as in Example 74. The intrinsic viscosities of the treated pellets and a portion of each of the pellets of Examples 76 and 77 were measured, and the results are shown in Table 18.

In each run, the pellets were extruded by the same twin extruder as used in Example 74 under the conditions indicated in Table 18, cooled, and cut to pellets.

The intrinsic viscosities and glass transition temperatures of the resulting hydroquinone polyhydroxypolyethers are shown in Table 18.

Table 18

| Ex-ample | Amount of hydro-quinone diglycidyl ether (parts) | Amount of cyclo-hexanone (parts) | Amount of p-cumyl-phenol (part) | Reaction conditions | | | | Intrinsic viscosity [η] of hydroquinone polyhydroxy poly-ether obtained in the reactor |
|---|---|---|---|---|---|---|---|---|
| | | | | Initial stage | | Later stage | | |
| | | | | Temp. (°C) | Time (hr) | Temp. (°C) | Time (hr) | |
| 75 | 446.7 | 169.0 | 22 | 120 | 2.0 | 130 | 1.0 | 0.45 |
| 76 | 447.8 | 0 | 22 | 120 | 0.5 | 130 | 0.2 | 0.32 |
| 77 | 446.7 | 0 | 11 | 120 | 0.5 | 130 | 0.2 | 0.36 |

| | Operating conditions of twin-screw extruder | | | Properties of hydroquinone polyhydroxy polyether obtained by extrusion | |
|---|---|---|---|---|---|
| | Barrel temper-ature | Average resi-dence time | Pressure reduction of vent | Intrinsic viscosity | Glass transition temperature |
| | 160-240 | 20 | yes | 0.98 | 62 |
| | 160-240 | 20 | yes | 0.83 | 62 |
| | 160-240 | 20 | yes | 1.24 | 63 |

CLAIMS

1. A substantially linear polyhydroxypolyether consisting essentially of recurring units of the formula

$$\left(OCH_2\underset{OH}{CH}CH_2O-R^1\right)_n \qquad .....(I)$$

wherein $R^1$ represents a p-phenylene group or a divalent aromatic hydrocarbon group containing the p-phenylene group as a main component, and n is a positive number,

said polyhydroxypolyether having an intrinsic viscosity [$\eta$], measured in o-chlorophenol at 25$^{o}$C, of 0.3 to 2 dl/g, and containing not more than 0.2% by weight of nonionic organic halogen.

2. A polyhydroxypolyether according to claim 1 wherein $R^1$ in formula (I) is a mixture of a p-phenylene group with not more than 50 mole%, based on the p-phenylene group, of at least one other divalent aromatic hydrocarbon group.

3. A polyhydroxypolyether according to claim 2 wherein said other divalent aromatic hydrocarbon group is selected from

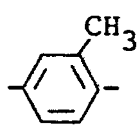 , 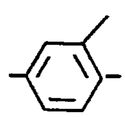 , 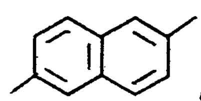 ,

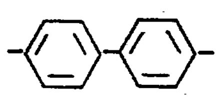 , 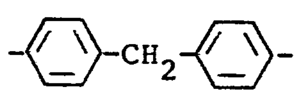 ,

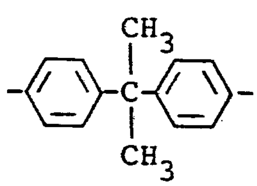 , 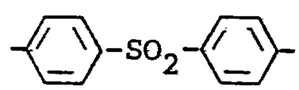 ,

and 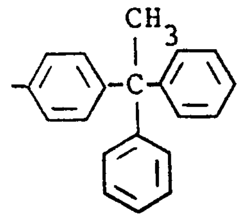

4. A polyhydroxypolyether according to claim 1, 2 or 3 wherein n is such that the polyhydroxypolyether has an intrinsic viscosity of 0.4 to 1.8 dl/g.

5. A polyhydroxypolyether according to any one of the claims 1 to 4 which has a melt viscosity of $10^2$ to $10^4$ Pas when extruded from a nozzle having a length of 30 mm and a diameter of 1.0 mm at 240°C at a shear speed of 10 $sec^{-1}$.

6. A process for producing a substantially linear polyhydroxypolyether as claimed in any one of the preceding claims which process comprises reacting a diglycidyl ether of an aromatic diol of the formula

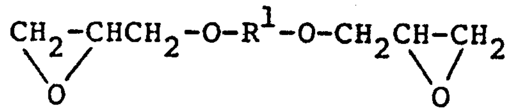 .....(II)

wherein $R^1$ is as defined in claim 1, with an aromatic diol of the formula

$$HO-R^1-OH \qquad .....(III)$$

wherein $R^1$ is as defined, in the presence of a catalyst selected from tertiary amines, quaternary ammonium compounds,tertiary phosphines and quaternary phosphonium compounds.

7. A process according to claim 6 wherein the molar ratio of (III) to (II) is from 0.95:1 to 1.05:1.

8. A process according to claim 6 or 7 wherein the catalyst is used in an amount of 0.001 to 10 mole% based on the diglycidyl ether of formula (II).

9. A process according to claim 6, 7 or 8 wherein the reaction is carried out at a temperature of 70 to 260°C.

10. A composition comprising

(A) a polyalkylene terephthalate composed of ethylene terephthalate units as main structural units, and

(B) a substantially linear polyhydroxypolyether as claimed in any one of claims 1 to 5.

11. A composition according to claim 10 wherein the polyalkylene terephthalate (A) contains at least 70 mole%, based on the total amount of the structural units, of the ethylene terephthalate units.

12. A composition according to claim 10 or 11 wherein the polyalkylene terephthalate has an intrinsic viscosity, measured at 25°C in a mixed solvent of phenol and tetrachloroethane in a weight ratio of 1:1, of 0.5 to 1.5 dl/g.

13. A composition according to claim 10, 11 or 12 comprising 100 parts by weight of the polyalkylene terephthalate (A) and 1 to 500 parts by weight of the polyhydroxypolyether (b).

14. A stretched molded article of a composition as claimed in any one of claims 10 to 13.

15. A preform for the production of stretched hollow articles or a stretched hollow molded article prepared from a composition as claimed in any one of claims 10 to 13.

16. A laminated molded article comprising a layer composed of a polyhydroxypolyether or composition as claimed in any one of claims 1 to 5 and 10 to 13, and a layer of a polyalkylene terephthalate composed of ethylene teretphthalate units as main structural units.

17. A laminated molded article according to claim 16 which is stretched.

18. A laminated molded article according to claim 16 which is a preform for the production of hollow articles or which is a hollow molded article.

19. Use of a polyhydroxypolyether as claimed in any one of claims 1 to 5 as a gas-barrier imparting agent.